# EUROPEAN PATENT APPLICATION

(11) **EP 3 926 725 A1**
(43) Date of publication of application: **22.12.2021**
(21) Application number: 20756080.6
(22) Date of filing: 14.02.2020
(51) Int. Cl.: H01M 10/058, H01M 2/04, H01M 2/36, H01M 10/052

(54) **STRUCTURE FOR NONAQUEOUS ELECTROLYTE SECONDARY BATTERIES, METHOD FOR PRODUCING STRUCTURE FOR NONAQUEOUS ELECTROLYTE SECONDARY BATTERIES, AND METHOD FOR PRODUCING NONAQUEOUS ELECTROLYTE SECONDARY BATTERY**

(30) Priority: 15.02.2019 JP 2019025968; 06.02.2020 JP 2020019164
(71) Applicant: Eliiy Power Co., Ltd., Tokyo 141-0032 (JP)
(72) Inventor: KAWAKAMI, Kiyomoto, Tokyo 141-0032 (JP); SATO, Hiroshi, Tokyo 141-0032 (JP)
(74) Representative: Strehl Schübel-Hopf & Partner
(86) International application number: PCT/JP2020/005895
(87) International publication number: WO 2020/166719

(57) **Abstract**

An electrode junction body, and an exterior member having a housing chamber 41 housing the electrode junction body are provided. An electrolytic solution is not injected into the housing chamber 41, and the housing chamber 41 is hermetically sealed, with its interior being in a low humidity state.

## Description

### [Technical Field]

This invention relates to a nonaqueous electrolyte secondary battery structure which is used in a nonaqueous electrolyte secondary battery using a nonaqueous electrolyte as an electrolyte; a method for producing the nonaqueous electrolyte secondary battery structure; and a method for producing a nonaqueous electrolyte secondary battery.

### [Background Art]

A lithium ion secondary battery using a lithium metal oxide as an electrode active material, for example, is widely used as a nonaqueous electrolyte secondary battery. The lithium ion secondary battery is equipped with an electrode junction body having a group of electrodes each formed with an electrode active material layer, an exterior member housing the electrode junction body inside, and an electrolytic solution provided within the exterior member. Known examples of such a lithium ion secondary battery are a case-contained battery housing an electrode junction body in a cylindrical battery case or a square case of a quadrangular prism shape as an exterior member; and a laminated battery comprising an electrode junction body surrounded with and sealed with a laminate film as an exterior member. Each of the batteries is used alone as a unit cell (battery cell) for a secondary battery, or used as a package composed of a plurality of the unit cells connected together in series.

The electrode active material layer and the electrolytic solution used in the lithium ion secondary battery pose the problem of failing to obtain desired battery performance when taking in water. Assume, for example, that when the electrode group is housed within the exterior case (or laminate film) and sealed up therein, the electrode contains water. In this case, the water is incorporated into the electrolytic solution, with the result that the battery when charged or discharged expands and its function is impaired. In the production of the lithium ion secondary battery, particularly in the steps of solution or liquid injection and hermetic sealing, therefore, care should be taken not to entrain water, together with the member, into the exterior case (or laminate film), and to avoid the incorporation of water from outside the exterior case. In view of these circumstances, the lithium ion secondary battery is subjected at least to the following series of steps performed collectively in a water-controlled place intended to avoid the incorporation of water: A slurry for the electrode active material is coated onto a metal plate for the electrode, and dried. The resulting electrodes are gathered to prepare an electrode group for an electrode junction body. The electrode group and a current collector are connected together. The electrode group, the current collector, and an electrolytic solution are housed in the exterior case (or laminate film) . The case is hermetically sealed.

With the case-contained battery, therefore, the exterior case, which houses the electrode junction body having the electrode group and the current collecting member connected to the electrode group, and the electrolytic solution, is hermetically sealed, and the so configured case is shipped as a product.

With the laminated battery, on the other hand, the laminate film, which houses the electrode junction body having the electrode group and a tab lead connected to the electrode group, and the electrolytic solution, is hermetically sealed, and the so configured laminate film is shipped as a product.

### [Prior Art Documents]

### [Patent Documents]

[Patent Document 1] JP-A-2012-69268
[Patent Document 2] JP-A-2009-26490

### [Summary of the Invention]

### [Problems to be solved by the invention]

The lithium ion secondary battery, however, requires care in transportation, particularly air transportation using an aircraft with the transport volume limited, in order to ensure the safety of transportation. This is because the electrolytic solution contained in the lithium ion secondary battery is classified as Class 4 (flammable liquids) under the Fire Service Law. Even if the safety of the lithium ion secondary battery itself is enhanced, therefore, the limitation on transportation remains unchanged, as long as the electrolytic solution falling under Class 4 (flammable liquids) under the Fire Service Law is used.

Consequently, if the lithium ion secondary battery produced needs to be transported to a remote location, a means such as a vehicle or a ship is to be used, posing the problem of taking more days for transportation than by air transportation.

Such a problem is not limited to the lithium ion secondary battery, and exists similarly in a nonaqueous electrolyte secondary battery using an electrode active material other than the lithium metal oxide.

The present invention has been accomplished in the light of the above-mentioned circumstances. It is an object of this invention to provide a nonaqueous electrolyte secondary battery structure which ensures the safety of its transportation while suppressing the deterioration of battery performance in battery production; a method for producing the nonaqueous electrolyte secondary battery structure; and a method for producing a nonaqueous electrolyte secondary battery from the structure. [Means for Solving the Problems]

An aspect of the present invention, designed to solve the above-mentioned problem, resides in a nonaqueous electrolyte secondary battery structure comprising an electrode junction body, and an exterior member having a housing chamber housing the electrode junction body, wherein an electrolytic solution is not injected into the housing chamber, and the housing chamber is hermetically sealed, with its interior in a low humidity state.

In such an aspect, the housing chamber not filled with the electrolytic solution is hermetically sealed in the low humidity state, so that during air transportation or the like, a limitation on transportation ascribed to the electrolytic solution is not imposed. Thus, the structure can be transported by any transportation means including air transportation, and the transportation can be performed with safety and in a short time. After transportation of the nonaqueous electrolyte secondary battery structure, moreover, a nonaqueous electrolyte secondary battery can be produced easily by injecting an electrolytic solution into the housing chamber of the nonaqueous electrolyte secondary battery structure.

Since the housing chamber is hermetically sealed, with its interior in the low humidity state, the electrode active material layer of the electrode junction body or the electrolytic solution injected into the housing chamber can be inhibited from being degraded by the water inside the housing chamber. Thus, the resulting nonaqueous electrolyte secondary battery can obtain the desired battery performance, with a deficiency such as deterioration of battery capacity being suppressed.

Preferably, the exterior member has a liquid injection port through which the electrolytic solution can be injected into the housing chamber, and the liquid injection port is sealed. By so sealing the liquid injection port, the interior of the housing chamber can be held in a low humidity state. By unsealing the liquid injection port, moreover, the electrolytic solution can be easily injected therethrough.

It is also preferred that the exterior member be composed of a film, and an external electrode terminal penetrating the exterior member from inside to outside and connected to the electrode junction body be provided, and that the exterior member be equipped inside with the housing chamber and an electrolyte introduction portion communicating with the housing chamber. According to this configuration, an electrolyte can be introduced into the housing chamber via the electrolyte introduction portion.

The exterior member is also preferably hermetically sealed such that the outer periphery of the electrode junction body is continuously joined over the circumferential direction. In this configuration, the housing chamber not filled with the electrolyte is hermetically sealed. Thus, transportation by any transportation means, including air transportation, can be performed, without a limitation on the transport volume ascribed to the electrolytic solution, during air transportation or the like, and the transportation can be carried out safely in a short time. After the nonaqueous electrolyte secondary battery structure is transported, it suffices to unseal the nonaqueous electrolyte secondary battery structure, inject an electrolyte, and hermetically seal the structure again. Simply doing so enables a nonaqueous electrolyte secondary battery to be produced easily. By hermetically sealing the exterior member, moreover, it becomes difficult for a water-containing gas to enter the exterior member. Hence, the electrode active material layer provided in the electrode junction body housed inside the exterior member can be prevented from reacting with water. Besides, when the electrolyte is injected into the exterior member, the injected electrolyte can be prevented from reacting with water. As a result, a decline in battery performance of the resulting aqueous electrolyte secondary battery due to water can be suppressed.

It is preferred for the electrolyte introduction portion to have a height equal to or greater than the height of the housing chamber in a direction in which the housing chamber and the electrolyte introduction portion are arranged side by side. According to this feature, the exterior member can be hermetically sealed easily, and when the electrolyte is injected into the exterior member to produce a nonaqueous electrolyte secondary battery, an opening for injection of the electrolyte into the exterior member can be formed easily.

Another aspect of the present invention resides in a method for producing the nonaqueous electrolyte secondary battery structure described in the foregoing aspect, characterized by having a step of housing the electrode junction body in the housing chamber and hermetically sealing the housing chamber, without injecting the electrolytic solution into the housing chamber.

According to the above aspect, the interior of the housing chamber can be easily maintained in a low humidity state, by hermetically sealing the housing chamber in a low humidity environment, without injecting the electrolytic solution.

Preferably, the exterior member has a liquid injection port through which the electrolytic solution can be injected; the step of hermetically sealing the housing chamber includes a step of housing the electrode junction body in the housing chamber, and a step of sealing the liquid injection port for hermetic sealing, without injecting the electrolytic solution into the housing chamber; and at least the step of sealing the liquid injection port is performed in a low humidity environment. According to these features, at the time of sealing the liquid injection port, the interior of the housing chamber can be easily brought to a low humidity state.

Still another aspect of the present invention resides in a method for producing a nonaqueous electrolyte secondary battery, characterized by having a step of opening the housing chamber in a low humidity environment for the nonaqueous electrolyte secondary battery structure described in the above aspect; injecting the electrolytic solution into the housing chamber; and hermetically sealing the housing chamber.

According to such an aspect, the housing chamber is opened in a low humidity environment, an electrolytic solution is injected into the housing chamber, and the housing chamber is hermetically sealed. Thus, the electrode active material layer constituting the electrode junction body, or the electrolytic solution can be inhibited from being degraded. Thus, a deficiency such as deterioration of the battery capacity of the resulting nonaqueous electrolyte secondary battery can be suppressed, and the desired battery performance can be obtained.

Preferably, the exterior member has a liquid injection port which has been sealed beforehand for injecting the electrolytic solution. Also preferably, the opening of the housing chamber in the low humidity environment unseals the liquid injection port, the injection of the electrolytic solution into the housing chamber is performed through the liquid injection port, and the hermetic sealing of the housing chamber is the sealing of the liquid injection port. According to these features, the interior of the housing chamber is rendered open by the easy step of unsealing the liquid injection port, and the electrolytic solution can be easily injected through the liquid injection port. Sealing of the liquid injection port can easily result in the hermetic sealing of the housing chamber. In particular, the exterior member having the liquid injection port can be used in the same manner as is the conventional one. Thus, there is no need to provide two types of molds, a mold with the liquid injection port and a mold without it, as molds for formation of the exterior member, so that cost increases can be suppressed.

If the exterior member has not been provided with the liquid injection port, the opening of the housing chamber in the low humidity environment may form in the exterior member an opening portion through which the electrolytic solution is injectable; the injection of the electrolytic solution into the housing chamber may be performed through the opening portion, and the hermetic sealing of the housing chamber may be the sealing of the opening portion. In this case, it is advisable to use the exterior member having a liquid injection port formation region where the liquid injection port should be formed and whose thickness is smaller than that of other parts. In particular, the liquid injection port formation region is desirably a convex or concave zone so that the region where the liquid injection port should be formed is discernible from the appearance of the exterior member.

Preferably, the exterior member is composed of a film; the exterior member is equipped with the housing chamber and an electrolyte introduction portion communicating with the housing chamber; and the manufacturing method comprises an unsealing step of forming in the exterior member an opening portion communicating with the electrolyte introduction portion, an injection step of injecting an electrolyte into the electrolyte introduction portion through the opening portion, an impregnation step of impregnating the electrode junction body housed in the housing chamber with the electrolyte injected into the electrolyte introduction portion, and a hermetic sealing step of hermetically sealing the interior by closing at least a part of the electrolyte introduction portion. According to these features, a nonaqueous electrolyte secondary battery can be produced easily by simply providing the exterior member with the opening portion, and injecting the electrolyte. In addition, the injected electrolyte can be temporarily held by the electrolyte introduction portion, so that in the impregnation step, the electrode junction body can be impregnated with the electrolyte held in the electrolyte introduction portion. Hence, there is no need to inject the electrolyte through the opening portion while replenishing it until the impregnation is finished, thus obviating the necessity for a complicated step. Furthermore, before the impregnation is finished, the unsealing step and the injection step can be performed for a next aqueous electrolyte secondary battery structure. Thus, the manufacturing process can be carried out efficiently to increase productivity.

It is also preferred that after the impregnation step, a precharging step of performing preliminary charging be further provided, and that the hermetic sealing step be performed after the precharging step. According to these features, a gas generated in the precharging step can be discharged to the outside through the opening.

It is preferred for the hermetic sealing step to close at least a border of the electrolyte introduction portion with the housing chamber. According to this feature, the electrode junction body can be inhibited from moving inside.

Preferably, after the hermetic sealing step, there is further provided a cutting step of cutting the opening portion side of the electrolyte introduction portion, with the housing chamber being hermetically sealed. According to this feature, a relatively downsized nonaqueous electrolyte secondary battery can be produced, with a surplus region being cut off.

Preferably, the hermetic sealing step is performed between the injection step and the impregnation step, and the hermetic sealing step closes the opening portion side formed in the unsealing step. According to these features, the opening is closed in the impregnation step. Thus, leakage of the electrolyte through the opening can be suppressed, and the posture of the nonaqueous electrolyte secondary battery structure is not restricted.

Preferably, while the impregnation step is being performed for the single nonaqueous electrolyte secondary battery structure having the electrolyte injected thereinto in the injection step, the injection step is performed for another nonaqueous electrolyte secondary battery structure. According to this feature, during the impregnation step for one nonaqueous electrolyte secondary battery structure, the injection step for another nonaqueous electrolyte secondary battery structure can be performed. Thus, the production efficiency can be increased to increase productivity.

### [Effects of the Invention]

According to the present invention, no electrolytic solution is injected into the nonaqueous electrolyte secondary battery structure. Thus, the limitation on transportation ascribed to the electrolytic solution is not imposed, so that the structure can be transported by any transportation means including air transportation. Moreover, the interior of the housing chamber in the lithium ion secondary battery structure is placed in a low humidity state. Hence, the electrode active material layer of the electrode junction body or the electrolytic solution to be injected later is inhibited from being degraded by the water inside the housing chamber. Consequently, a decline in battery performance can be suppressed.

### [Brief Description of the Drawings]

[Fig. 1] is an exploded perspective view of a lithium ion secondary battery structure according to Embodiment 1 of the present invention.
[Fig. 2] is a partially cutaway view showing the internal construction of the lithium ion secondary battery structure according to Embodiment 1 of the present invention.
[Figs. 3(a), 3(b)] are views showing the schematic constitution of an electrode group according to Embodiment 1 of the present invention.
[Fig. 4] is a perspective view showing the schematic constitution of a package according to Embodiment 1 of the present invention.
[Fig. 5] is a flowchart illustrating a method for producing the lithium ion secondary battery structure according to Embodiment 1 of the present invention.
[Fig. 6] is a view illustrating a method for producing a lithium ion secondary battery according to Embodiment 1 of the present invention.
[Fig. 7] is a flowchart illustrating the method for producing the lithium ion secondary battery according to Embodiment 1 of the present invention.
[Fig. 8] is a partially cutaway side view of a modification of the lithium ion secondary battery structure according to Embodiment 1 of the present invention.
[Fig. 9] is a side view of a lithium ion secondary battery structure according to Embodiment 2 of the present invention.
[Fig. 10] is a flowchart illustrating a method for producing the lithium ion secondary battery structure according to Embodiment 2 of the present invention.
[Figs. 11(a), 11(b)] are views illustrating a modification of the lithium ion secondary battery structure, and a method for producing a lithium ion secondary battery, according to Embodiment 2 of the present invention.
[Figs. 12(a), 12(b)] are views illustrating the modification of the lithium ion secondary battery structure, and the method for producing the lithium ion secondary battery, according to Embodiment 2 of the present invention.
[Fig. 13] is a view illustrating the modification of the lithium ion secondary battery structure, and the method for producing the lithium ion secondary battery, according to Embodiment 2 of the present invention.
[Fig. 14] is a perspective view of a lithium ion secondary battery structure according to Embodiment 3 of the present invention.
[Fig. 15] is a plan view of the lithium ion secondary battery structure according to Embodiment 3 of the present invention.
[Fig. 16] is a sectional view of essential parts of the lithium ion secondary battery structure according to Embodiment 3 of the present invention.
[Fig. 17] is an exploded perspective view showing the schematic constitution of an electrode junction body according to Embodiment 3 of the present invention.
[Fig. 18] is a view illustrating a package according to Embodiment 3 of the present invention.
[Fig. 19] is a flowchart illustrating a method for producing the lithium ion secondary battery structure according to Embodiment 3 of the present invention.
[Fig. 20] is a flowchart illustrating a method for producing a lithium ion secondary battery according to Embodiment 3 of the present invention.
[Figs. 21(a), 21(b)] are plan views illustrating the method for producing the lithium ion secondary battery according to Embodiment 3 of the present invention.
[Figs. 22(a), 22(b)] are plan views illustrating the method for producing the lithium ion secondary battery according to Embodiment 3 of the present invention.
[Fig. 23] is a plan view illustrating the method for producing the lithium ion secondary battery according to Embodiment 3 of the present invention.
[Fig. 24] is a flowchart illustrating a method for producing a lithium ion secondary battery according to Embodiment 4 of the present invention.
[Figs. 25(a), 25(b)] are plan views illustrating the method for producing the lithium ion secondary battery according to Embodiment 4 of the present invention.
[Figs. 26(a), 26(b)] are plan views illustrating the method for producing the lithium ion secondary battery according to Embodiment 4 of the present invention.
[Figs. 27(a), 27(b)] are plan views illustrating the method for producing the lithium ion secondary battery according to Embodiment 4 of the present invention.

### [Mode for Carrying Out the Invention]

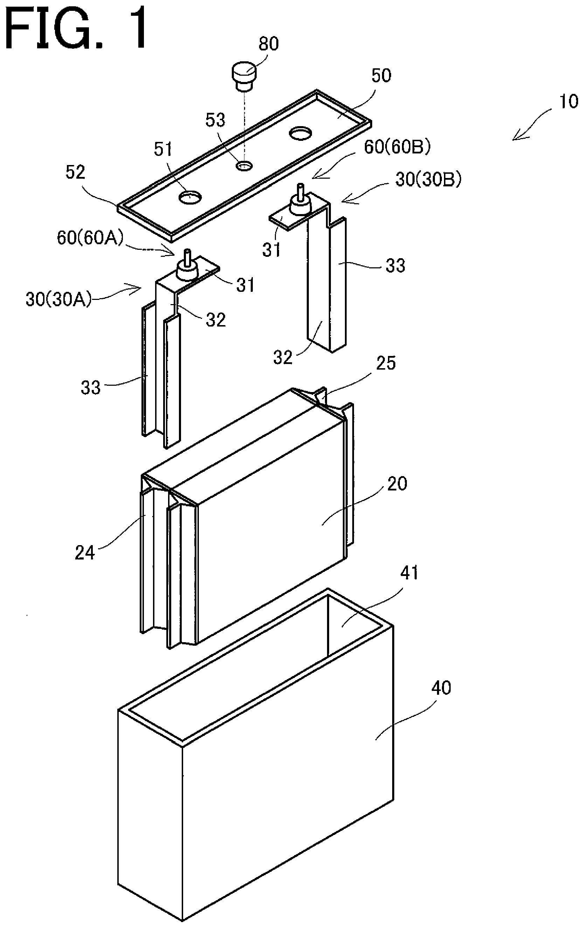

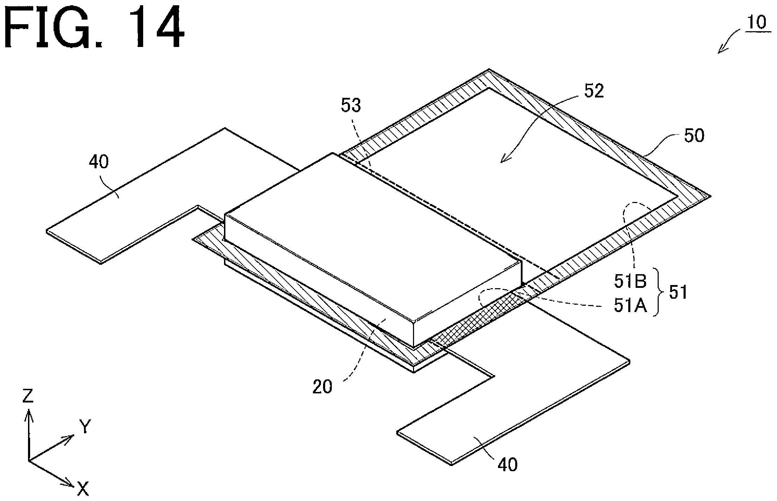

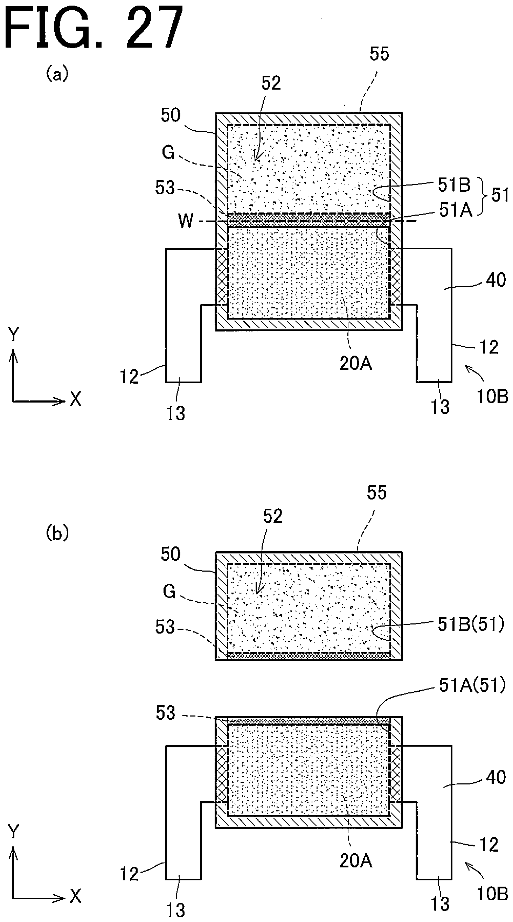

The present invention will be described in detail below based on its embodiments. Figs. 1 to 13 for Embodiments 1 and 2 and Figs. 14 to 27(a), 27(b) for Embodiments 3 and 4 are different in some of the numerals, although such numerals represent the same members.

### (Embodiment 1)

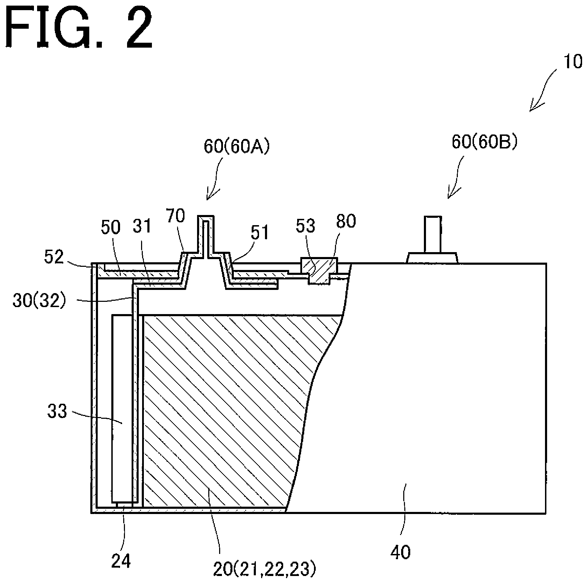

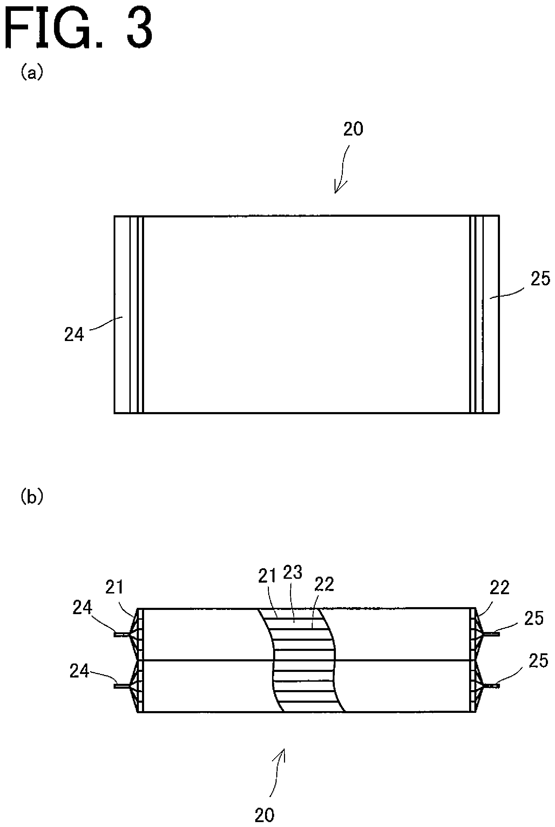

Fig. 1 is an exploded perspective view showing a lithium ion secondary battery structure. Fig. 2 is a partially cutaway side view showing the internal construction of the lithium ion secondary battery structure. Figs. 3(a), 3(b) are views showing the schematic constitution of an electrode group.

A lithium ion secondary battery structure 10 of the present embodiment is a structure for use in a lithium ion secondary battery. Concretely, as shown in Figs. 1 and 2, the lithium ion secondary battery structure 10 is equipped with an electrode junction body 20 which is an electrode group having a positive electrode plate 21 and a negative electrode plate 22; a pair of current collecting members 30 connected, respectively, to the positive electrode plate 21 and the negative electrode plate 22 of the electrode junction body 20; and a battery case 40 and a lid member 50 constituting an exterior member in which the electrode junction body 20 and the current collecting members 30 are housed.

The electrode junction body 20 has a multiplicity of the positive electrode plates 21 and the negative electrode plates 22 stacked alternately, with a separator 23 being sandwiched between the positive electrode plate 21 and the negative electrode plate 22, as shown in Fig. 3(b).

Each of the positive electrode plate 21 and the negative electrode plate 22 comprises an electrode active material layer formed on a metal foil. The metal foil used in the positive electrode plate 21 is, for example, an aluminum foil. As the metal foil used in the negative electrode plate 22, a copper foil, for example, is named.

At an end in the longitudinal direction of the electrode junction body 20, there is formed a positive electrode bundling section 24 which bundles together the ends of the plurality of positive electrode plates 21 where no electrode active material layer is formed. At the other end in the longitudinal direction of the electrode junction body 20, there is formed a negative electrode bundling section 25 which bundles together the ends of the plurality of negative electrode plates 22 where no electrode active material layer is formed. In the present embodiment, the electrode junction body 20 is provided with two of the positive electrode bundling sections 24 and two of the negative electrode bundling sections 25. The number of the positive electrode bundling sections 24 and the number of the negative electrode bundling sections 25 are each not limited, and may each be, for example, one or three or more. To the positive electrode bundling sections 24 and the negative electrode bundling sections 25, respectively, of the electrode junction body 20, the current collecting members 30 are connected.

The current collecting members 30 include a first current collecting plate 30A to be electrically connected to the positive electrode plates 21, and a second current collecting plate 30B to be electrically connected to the negative electrode plates 22. The first current collecting plate 30A is composed of a metal plate consisting essentially of aluminum, for example, and has one end side connected to the respective positive electrode bundling sections 24 of the electrode junction body 20. The second current collecting plate 30B is composed of a metal plate consisting essentially of copper, for example, and has one end side connected to the respective negative electrode bundling sections 25 of the electrode junction body 20. The current collecting plates 30A, 30B each comprise, for example, the same main material as the material for the electrode plate to be connected thereto, but may be a metal plate comprising other main material which can be connected to the electrode junction body and which can maintain electroconductivity.

Each of these current collecting members 30 is composed of an upper plate 31 contacting the inner surface of the lid member 50, and a lengthy joining plate 32 extending downward from the end of the upper plate 31. At both edges of the lengthy joining plate 32, connection plate pieces 33 bent longitudinally outwardly of the electrode junction body 20 are provided. In the present embodiment, each connection plate piece 33 is continuously provided over the longitudinal direction (up-and-down direction in Fig. 1) of the lengthy joining plate 32. Each current collecting member 30 is connected, by means of the connection plate pieces 33, to the two rows of positive electrode bundling sections 24 or negative electrode bundling sections 25 of the electrode junction body 20. A method of connection between the connection plate pieces 33 of the current collecting member 30 and the positive electrode bundling sections 24 or negative electrode bundling sections 25 of the electrode junction body 20 is not limited, but this connection can be performed satisfactorily, for example, by ultrasonic welding.

The upper plate 31 of the current collecting member 30 is provided with a terminal portion 60 protruding outwardly from a through-hole 51 provided in the lid member 50. That is, the upper plate 31 of the first current collecting plate 30A is provided with a positive electrode terminal portion 60A tied to the positive electrode plate 21, while the upper plate 31 of the second current collecting plate 30B is provided with a negative electrode terminal portion 60B tied to the negative electrode plate 22.

The current collecting member 30 and the electrode junction body 20 in such configurations are housed within the battery case 40, with the connection plate pieces 33 of the current collecting member 30 being connected to the positive electrode bundling sections 24 or negative electrode bundling sections 25 of the electrode junction body 20 as described above.

The battery case 40 is formed, for example, from a metallic material such as stainless steel. Of course, the material for the battery case 40 is not limited to the metallic material, and may be a resin material or the like. Such a battery case 40 is shaped like a hollow box provided with a housing chamber 41 housing the electrode junction body 20 and the current collecting members 30 inside, and is open at the top.

The lid member 50 seals the top opening of the housing chamber 41 of the battery case 40, and is formed, for example, from a metallic material such as stainless steel. Of course, the material for the lid member 50 is not limited to the metallic material, and may be a resin material or the like.

The outer periphery of the lid member 50 is provided with a joining portion 52 formed by bending the end upward. The joining portion 52 is laser-welded to the upper end of the battery case 40, whereby the lid member 50 is fixed to the battery case 40. The manner of fixing between the battery case 40 and the lid member 50 is not limited to this method and, if the interior of the housing chamber 41 is kept hermetically sealed, may be adhesion using an adhesive, or may be fixing using a screw, a bolt, a clip or the like. The method of fixing is preferably such a method that after the battery case 40 and the lid member 50 are fixed together, their fixing cannot be easily released. Thus, welding or the like is used preferably.

The lid member 50 is formed with two of the through-holes 51 into which the positive electrode terminal portion 60A and the negative electrode terminal portion 60B of the current collecting members 30 are inserted. With the positive electrode terminal portion 60A and the negative electrode terminal portion 60B protruding from these through-holes 51 to the outside of the lid member 50, the current collecting members 30 are fixed to the lid member 50.

The lid member 50 and the current collecting members 30 are fixed together in a state insulated from each other, as shown in Fig. 2. In the present embodiment, for example, the lid member 50 and the current collecting member 30 are joined together and insulated from each other by an adhesion/insulation member 70 composed of a resin material. The adhesion/insulation member 70 is formed, for example, by performing injection molding in a mold where the lid member 50 and the current collecting member 30 are arranged. That is, the lid member 50 and the current collecting member 30 are fixed together by the adhesion/insulation member 70 and integrated thereby.

Furthermore, the lid member 50 is provided with a liquid injection port 53 for injection of an electrolytic solution into the housing chamber 41 of the battery case 40. The liquid injection port 53 is an opening provided to penetrate the lid member 50, and permits the housing chamber 41 to open so that the housing chamber 41 and the outside communicate. Such a liquid injection port 53 is sealed with a sealing member 80.

The sealing member 80 seals the liquid injection port 53 to hermetically seal the interior of the housing chamber 41. In the present embodiment, no electrolytic solution is injected into the housing chamber 41; the interior of the housing chamber 41 is in a dry state (low humidity state); and the liquid injection port 53 is sealed with the sealing member 80 to hermetically seal the housing chamber 41. An assembly with these features is called the lithium ion secondary battery structure 10. On the other hand, the sealingmember 80 is detached, or left attached; an electrolytic solution is injected into the housing chamber 41 through the liquid injection port 53 via or without the sealing member 80; and the liquid injection port 53 is sealed with the sealing member 80 or a sealing member different from the sealing member 80 to hermetically seal the housing chamber 41. An assembly undergoing this procedure is called a lithium ion secondary battery.

The low humidity state inside the housing chamber 41 refers to a highly dry state in which the electrode junction body 20 within the housing chamber 41, or the electrolytic solution injected into the housing chamber 41 is in an environment without such a water content as to impair the function of the battery, for example, at a dew-point temperature of -20°C or lower. The housing chamber 41 is hermetically sealed, with its interior in the low humidity state, as noted above. Thus, the electrode junction body 20 is inhibited from absorbing water contained in a gas present within the housing chamber 41 and, finally, deterioration of the performance of the battery can be suppressed. Besides, the housing chamber 41 is hermetically sealed, with its interior in the low humidity state, so that when an electrolytic solution is injected afterwards into the housing chamber 41 to produce a lithium ion secondary battery, incorporation of water inside the housing chamber 41 into the electrolytic solution can be suppressed, and deterioration in the performance of the lithium ion secondary battery can be suppressed. Concretely, the lithium ion secondary battery generally uses a nonaqueous electrolytic solution. In case water is taken into the nonaqueous electrolytic solution, the desired performance of the lithium ion secondary battery will be unobtainable.

The gas accommodated in the housing chamber 41 is not limited, as long as it is in a low humidity state. For example, it may be air, or an inert gas such as nitrogen or a rare gas may be charged into the housing chamber. By charging the inert gas into the housing chamber 41, for example, inclusion of water in the housing chamber 41 can be suppressed more reliably, and a deterioration in the battery performance can be suppressed.

The interior of the housing chamber 41 may be at a pressure lower than atmospheric pressure (1 Pa) (i.e., a negative pressure) . By so placing the interior of the housing chamber 41 at the pressure lower than atmospheric pressure (1 Pa) (i.e., negative pressure), deformation of the exterior member due to an air pressure difference, or detachment of the sealing member 80 sealing the liquid injection port 53 can be suppressed during transportation under a low pressure environment with the use of an aircraft.

That is, the housing chamber 41 may be sealed, with its interior in an evacuated state. In other words, the interior of the housing chamber 41 may be in a vacuum state. The vacuum state refers, for example, to a state at a pressure of 1 Pa or lower, preferably 0.1 Pa or lower. Since the interior of the housing chamber 41 is evacuated, the occurrence of problems which can be caused by the air pressure difference during air transportation can be suppressed.

The low humidity state inside the housing chamber 41 includes a vacuum state with a humidity of zero or as close as possible to zero.

With the lithium ion secondary battery structure 10 having the above features, no electrolytic solution is injected into the housing chamber 41, the interior of the housing chamber 41 is in a low humidity state, and the liquid injection port 53 is sealed, with the result that the housing chamber 41 is hermetically sealed. Hence, the limitation on transportation ascribed to an electrolytic solution is not imposed during air transportation or the like, the structure 10 can be transported by any transportation means including air transportation, and the transportation can be performed with safety and in a short time.

After transportation of the lithium ion secondary battery structure of the present embodiment, moreover, a lithium ion secondary battery can be produced easily by injecting an electrolytic solution through the liquid injection port 53 of the lithium ion secondary battery structure 10, and sealing the liquid injection port 53.

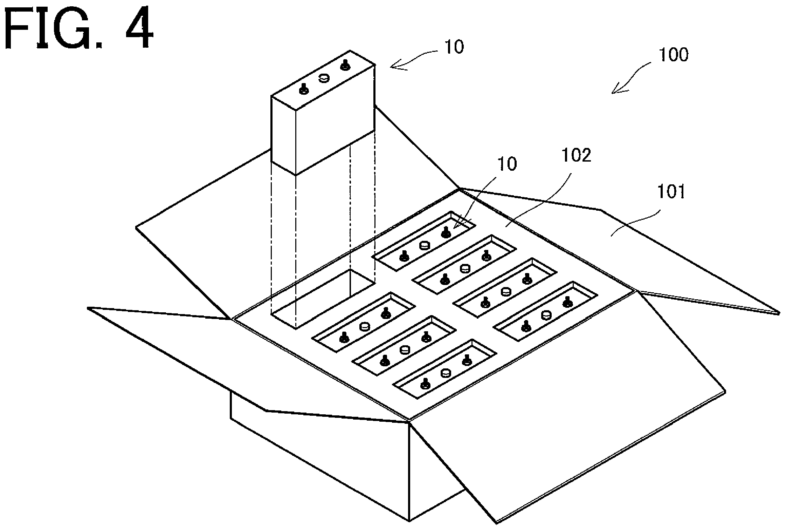

The lithium ion secondary battery structure 10 of the above configuration is also packed so as to be transportable, and is transported in the form of a package. An example of the package is shown in Fig. 4. As shown in Fig. 4, a package 100 comprises a plurality of the lithium ion secondary battery structures 10, a packing case 101 accommodating the plurality of lithium ion secondary battery structures 10 inside, and a cushioning material 102 provided around the lithium ion secondary battery structures 10 inside the packing case 101.

The packing case 101 has the shape of a hollow box formed from a corrugated board, a resin, a metal or the like. Inside the so configured packing case 101, the plurality of lithium ion secondary battery structures 10 are arranged, with their surroundings wrapped in the cushioning material 102.

As the cushioning material 102, a porous material such as polystyrene foam or sponge, paper, or a bag containing air (air cushioning material), for example, is usable. By providing the cushioning material, breakage due to mutual contact of the lithium ion secondary battery structures 10 during transportation can be suppressed.

As noted above, the plurality of lithium ion secondary battery structures 10 are transported collectively as the package 100.

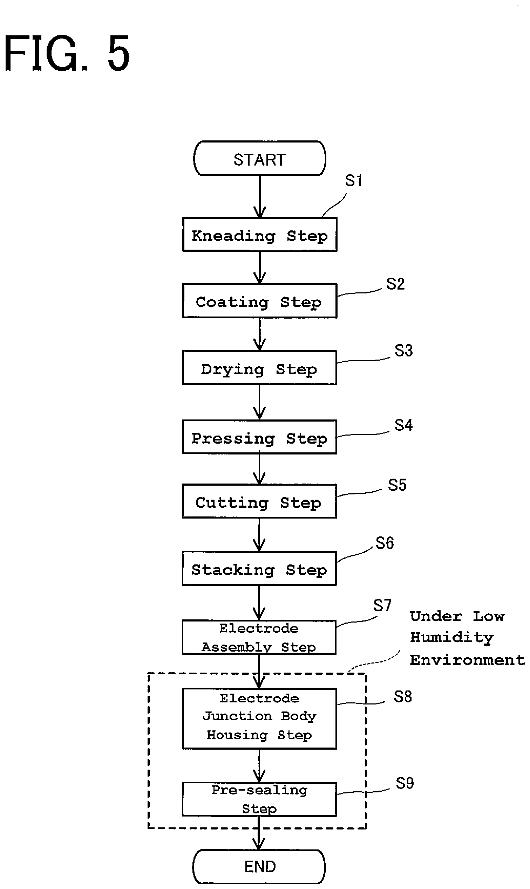

A method for producing the lithium ion secondary battery structure 10 according to the present embodiment will be described by reference to Fig. 5. Fig. 5 is a flowchart for explaining the method for producing the lithium ion secondary battery structure.

In a kneading step as Step S1 shown in Fig. 5, a plurality of materials for forming electrodes serving as a positive electrode and a negative electrode are mixed together (kneaded) to form electrode slurries to be coated on metal foil sheets of aluminum (for positive electrode) and copper (for negative electrode), for example. The electrode slurries for the positive electrode and the negative electrode are prepared, respectively, in this manner. In the kneading step, a kneading device for positive electrode slurry formation and a kneading device for negative electrode slurry formation are rendered ready for use, and the two types of slurries are formed concurrently. Needless to say, the two types of slurries may be formed in sequence.

In a coating step as Step S2, the positive electrode slurry and the negative electrode slurry formed in the kneading step as Step S1 are coated, respectively, on the metal foil sheets. The positive electrode slurry is coated on the aluminum foil sheet becoming a positive electrode plate, while the negative electrode slurry is coated on the copper foil sheet becoming a negative electrode plate. Generally, the metal foil sheet is lengthy, and has a front surface, or both the front surface and a rear surface, coated with the desired electrode slurry.

Then, in a drying step as Step S3, the electrode slurry coated on the metal foil sheet in the coating step as Step S2 is dried to form an electrode active material layer composed of the dried electrode slurry.

Then, in a pressing step as Step S4, the electrode active material layer and the metal foil sheet are pressed together. This pressing step can enhance adhesion between the electrode active material layer and the metal foil sheet.

Then, in a cutting step as Step S5, the electrode active material layer and the metal foil sheet pressed by the pressing step are cut to a desired size to produce an electrode plate having the electrode active material layer formed on the metal foil sheet.

Like the kneading step as Step S1, each of the coating step as Step S2 to the cutting step as Step S5 can be performed for both of the positive electrode and the negative electrode at the same time. As a result, when the cutting step has been finished, a plurality of positive electrode plates 21 and a plurality of negative electrode plates 22 can be provided.

Then, in a stacking step as Step S6, the plurality of positive electrode plates 21 and the plurality of negative electrode plates 22 are alternately stacked, with a separator 23 being interposed between the positive electrode plate 21 and the negative electrode plate 22, and they are bundled together. Alternatively, the lengthy positive electrode plate 21 and the lengthy negative electrode plate 22 each cut to a predetermined length are superposed on each other, with the lengthy separator 23 being interposed therebetween, and wound. As a result, an electrode junction body 20 constituted by superposing the positive electrode plate 21, the separator 23, and the negative electrode plate 22 is produced.

Then, in an electrode assembly step as Step S7, the current collecting member 30 is mounted on the electrode junction body 20produced in the stacking step to integrate the electrode junction body 20 and the current collecting member 30. In the present embodiment, the current collecting member 30 and the lid member 50 are integrated by the adhesion/insulation member 70 as stated earlier. Thus, the current collecting member 30 integrated with the lid member 50 is mounted on the electrode junction body 20. That is, the electrode junction body is mounted on the lid member 50.

Then, in an electrode junction body housing step as Step S8, the electrode junction body mounted on the lid member 50 is housed in the housing chamber 41 of the battery case 40, and the lid member 50 and the battery case 40 are joined together.

Then, in a pre-sealing step as Step S9, the liquid injection port 53 of the lid member 50 is sealed with the sealing member 80 to hermetically seal the housing chamber 41. The sealing with the sealing member 80 is performed such that even when the lithium ion secondary battery structure 10 is disposed in the atmosphere after completion of this step, no water enters the housing chamber 41, and that during transportation, such as aerial transportation, of the lithium ion secondary battery structure 10, the sealing member 80 is not detached. For use as the sealing member 80, for example, the injection port may be closed with a melt of a metallic material having a lower melting point than that of the battery case 40 or the lid member 50, or a highly moisture-resistant aluminum tape so adherent as not to peel off under the influence of air pressure during air transportation may seal the injection port. Instead of sealing the liquid injection port 53, it is permissible to wrap the entire lithium ion secondary battery structure 10 in a sealer such as a laminate film, and evacuate inside the laminate film to hermetically seal the entire lithium ion secondary battery structure 10, thereby sealing the liquid injection port 53 (instead of the laminate film, an insulating film such as a single-layer vinyl film may be used, if it can seal the liquid injection port and does not involve the risk of breaking during transportation) . This sealing with the laminate film, if performed under a low humidity environment, enables the interior of the battery case 40 to be kept in a low humidity state. In the present embodiment, the electrode junction body housing step as Step S8 and the pre-sealing step as Step S9 are performed in a low humidity environment, whereby the housing chamber 41 can be hermetically sealed, with its interior in a low humidity state. Incidentally, a method of hermetically sealing the battery case 40 and the lid member 50 under the low humidity environment can be exemplified by disposing a hermetic sealing device, which hermetically seals the battery case 40 and the lid member 50, in a dry room adjusted to a low humidity state, and performing the joining of the battery case 40 and the lid member 50 and the sealing of the liquid injection port 53 by the hermetic sealing device within the dry room. As another method, the joining of the battery case 40 and the lid member 50 and the sealing of the liquid injection port 53 may be carried out, with a space inside the hermetic sealing device for the execution of hermetic sealing being kept in a low humidity state, even if the hermetic sealing device is disposed outside the dry room. At this time, can should be taken to make sure that the low humidity state is maintained from the electrode junction body housing step as Step S8 until the pre-sealing step as Step S9. For example, see to it that the electrode junction body housing step as Step S8 and the pre-sealing step as Step S9 are performed continuously in the same low humidity environment (within the same dry room) . If at least one of the electrode junction body housing step as Step S8 and the pre-sealing step as Step S9 is performed using a device not in a low humidity environment (outside the dry room) (necessary treatment is performed, with the interior of the device in a low humidity state), the environment surrounding the objects to be treated is to be maintained in a low humidity state even during transportation of the objects (to be treated) midway between these two steps. By the way, the term "under or in a (the) low humidity environment" refers, for example, to a highly dry state at a dew-point temperature of -20°C or lower. The type of the gas in the low humidity environment is not limited, and may be air, or an inert gas such as nitrogen or a rare gas.

In the present embodiment, the electrode junctionbodyhousing step and the pre-sealing step are performed in the low humidity environment. It is desirable, however, that at least after the drying step as Step S3 in Fig. 5, all of the steps for production of the lithium ion secondary battery structure 10 shown in Fig. 5 be carried out in a low humidity environment and, moreover, the step performed in the low humidity environment be performed in the same dry room. In charging an inert gas into the housing chamber 41, moreover, it is recommendable that the method of charging an inert gas such as nitrogen into the housing chamber 41 be an optimum method conformed to the aforementioned method of sealing. For example, it is advisable that the process, starting at the stage of joining of the lid member 50 to the battery case 40, be performed in a low humidity environment and in an inert gas atmosphere. If the pre-sealing step is needed thereafter (if the liquid injection port 53 is formed in the lid member 50), the process up to this pre-sealing step may be performed in a low humidity environment and in an inert gas atmosphere. In addition, if the pre-sealing step is needed thereafter (if the liquid injection port 53 is formed in the lid member 50), the inert gas atmosphere need not be used at the stage of joining of the lid member 50 to the battery case 40 and, during the pre-sealing in which the liquid injection port 53 itself is to bepre-sealed, an inert gas maybe forcibly introduced into the housing chamber 41 of the battery case 40 through the liquid injection port 53. In this case, an exhaust port within the housing chamber 41 needs to be provided separately from the liquid injection port 53 (this exhaust port also needs to be pre-sealed as is the liquid injection port 53) . If the lithium ion secondary battery structure 10 itself is to be sealed with the sealer, it is recommendable to introduce an inert gas forcibly into the space of the sealer accommodating the lithium ion secondary battery structure 10, before sealing it with the sealer completely.

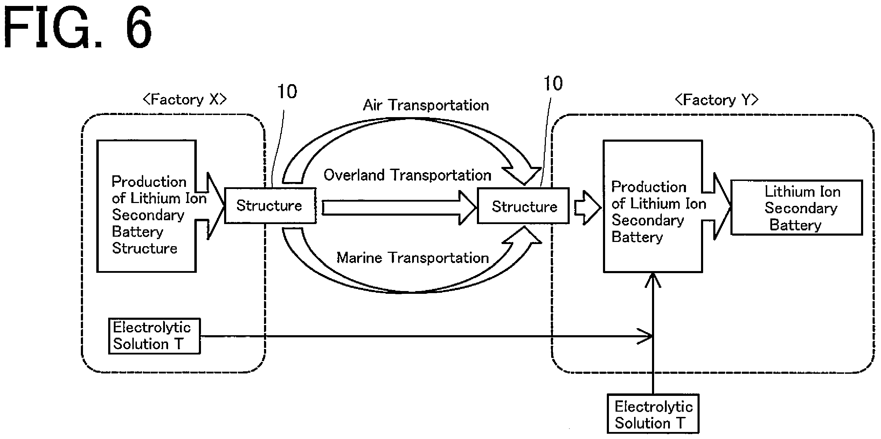

A method of producing a lithium ion secondary battery using the above lithium ion secondary battery structure 10 will be described by reference to Fig. 6. Fig. 6 is a view for illustration of the method for producing a lithium ion secondary battery.

As shown in Fig. 6, the lithium ion secondary battery structure 10 is produced by the aforementioned Step S1 to Step S9 in Factory X. As described above, the lithium ion secondary battery structure 10 has the housing chamber 41 where an electrolytic solution T has not been injected, and where the liquid injection port 53 for injection of the electrolytic solution T has been sealed, with the interior of the housing chamber 41 being in a low humidity state.

The lithium ion secondary battery structure 10 produced by Factory X is transported to Factory Y remote from Factory X. For example, there are cases where both Factory X and Factory Y are located in Japan, like Factory X in Aomori Prefecture, and Factory Y in Hiroshima Prefecture, and like Factory X in Hokkaido, and Factory Y in Okinawa; and Factory X is in Japan, while Factory Y is in a foreign country such as China or the U.S.A. In the present embodiment, Factory X producing the lithium ion secondary battery structure 10 is described as being present in Japan, but needless to say, Factory X may be in a foreign country, while Factory Y may be in Japan.

Factory X and Factory Y are located in places separated by a distance over which the resulting product needs to be transported using a transportation means such as an automobile, a train, a ship, or an aircraft. The lithium ion secondary battery structure 10 produced in Factory X has not been filled with the electrolytic solution T. Therefore, it is free from the limitation on transportation ascribed to the electrolytic solution T, and can thus be transported by any transportation means including air transportation.

The transportation of the lithium ion secondary battery structure 10 is performed such that a plurality of the lithium ion secondary battery structures 10 are collectively transported in the form of the package 100 mentioned above.

The lithium ion secondary battery structure 10 transported to Factory Y is formed into a lithium ion secondary battery by injecting the electrolytic solution T into the housing chamber 41 at Factory Y.

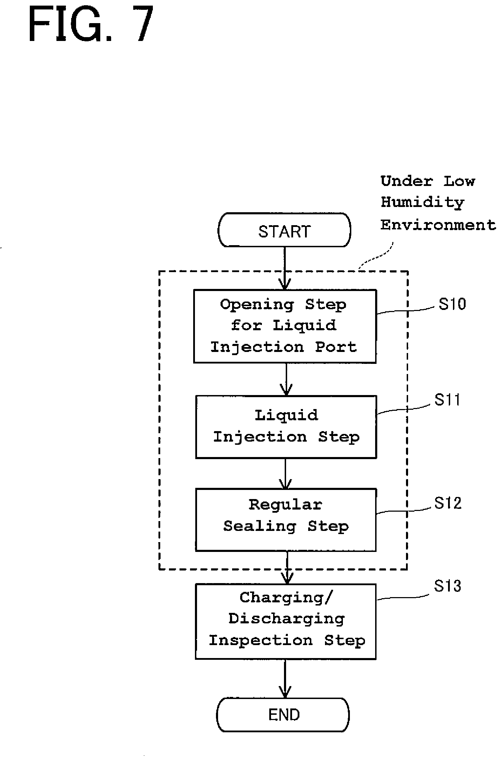

The method of producing the lithium ion secondary battery with the use of the lithium ion secondary battery structure 10 will be described by reference to Fig. 7. Fig. 7 is a flowchart for illustrating the method for producing the lithium ion secondary battery.

In an opening step for the liquid injection port as Step S10, the liquid injection port 53 of the lithium ion secondary battery structure 10 is unsealed. In the present embodiment, the sealing member 80 sealing the liquid injection port 53 is removed to unseal the liquid injection port 53. As a method for this removal, if a metallic material has been melted for sealing, for example, the metallic material is heated to be molten, and the molten metallic material is sucked and removed so as not to enter the housing chamber 41. If an aluminum tape has been used for sealing, heating or the like is carried out to weaken the adhesive force of the tape, and the tape is removed. If sealing has been performed by hermetically sealing the entire lithium ion secondary battery structure 10 with a sealer such as a laminate film, on the other hand, the sealer is unsealed These steps are performed under a low humidity environment, so that water is not taken into the housing chamber 41 after the opening procedure. If an inert gas is charged into the housing chamber 41 as mentioned above, this unsealing step is also performed in an inert gas atmosphere, and subsequent steps for injection of an electrolytic solution and re-sealing are to be performed in an inert atmosphere. If the lid member has been provided with an exhaust port for introduction of the inert gas, moreover, re-unsealing of this exhaust port is not particularly needed, but if its unsealing becomes necessary for deaeration or the like, it may be unsealed.

Then, in a liquid injection step as Step S11, the electrolytic solution T is injected into the housing chamber 41 through the liquid injection port 53 of the lithium ion secondary battery structure 10. This liquid injection step is also carried out in a low humidity environment.

The electrolytic solution T to be used in Factory Y is transported from Factory X to Factory Y separately from the lithium ion secondary battery structure 10. If the electrolytic solution to be injected is transported from Factory X, it is possible to minimize the error of injecting an electrolytic solution different in composition from the electrolytic solution which should be injected. If care is taken to avoid making such an error, acquisition of the electrolytic solution T to be used in Factory Y is, of course, not limited to the above-mentioned manner of acquisition. For example, the same electrolytic solution as the electrolytic solution T to be injected into the lithium ion secondary battery structure 10 is procured directly from an electrolytic solution manufacturer located near Factory Y. This procurement is preferred, because Factory Y can provide the necessary electrolytic solution T without involving the limitation associated with the transportation of the electrolytic solution T. Particularly if Factory X and Factory Y are located in different countries, it is preferred to procure the necessary electrolytic solution T in the country where Factory Y is located. If Factory X and Factory Y belong to different companies, moreover, the company owning Factory Y which has purchased the lithium ion secondary battery structure 10 has the possibility of procuring the electrolytic solution T, which is to be injected into the lithium ion secondary battery structure 10, at a low cost through its own channels. This way of procurement is preferred.

Then, formation charging (not shown) is performed. When this formation charging is performed, the liquid injection port 53 has not yet been sealed, so that a gas generated by the formation charging is exhausted to the outside of the housing chamber 41 through the liquid injection port 53. In a regular sealing step as Step S12, the liquid injection port 53 is sealed to hermetically seal the housing chamber 41, whereby a lithium ion secondary battery is produced. This regular sealing step is also to be performed in a low humidity environment. The sealing of the liquid injection port 53 is carried out using, for example, a melt of a metallic material. The metallic material used at this time may be the same material as the metallic material used in the tentative sealing step, or may be a metallic material having a high force of fusion bonding to the material of the lid member 50 where the liquid injection port 53 is formed.

Then, in a charging/discharging inspection step as Step S13, the products undergo inspection such as charging/discharging inspection. The product which fulfills predetermined criteria is shipped as a lithium ion secondary battery.

In the above manufacturing process for the lithium ion secondary battery, Steps S10 to S12, namely, the opening step for the liquid injection port 53, the liquid injection step, and the regular sealing step, are performed in a low humidity environment, as mentioned above. Incidentally, the term "under or in a (the) low humidity environment" refers, for example, to a highly dry state at a dew-point temperature of -40°C or lower. The type of the gas in the low humidity environment is not limited, and may be air, or an inert gas such as nitrogen or a rare gas.

As noted above, the opening step for the liquid injection port 53, the liquid injection step, and the regular sealing step are performed in the low humidity environment. As a result, the housing chamber 41 is hermetically sealed, with its interior in a low humidity state. Thus, water can be inhibited from being taken into the housing chamber 41, and the inclusion of water in the electrolytic solution is suppressed. Hence, a deficiency in the resulting lithium ion secondary battery is suppressed, and the desired battery performance can be obtained.

The lithium ion secondary battery structure 10 having the housing chamber 41 where the electrolytic solution has not been injected and which is in the low humidity state is transported from Factory X to Factory Y, as stated above. In air transportation or the like, therefore, the volume of transport is not restricted, and transportation can take place safely. Consequently, as compared with the transportation of the lithium ion secondary battery, with the electrolytic solution T injected, from Factory X to Factory Y, safe transportation can be done in fewer days of transportation with the use of air transportation.

As explained above, the lithium ion secondary battery structure 10 of the present embodiment comprises the electrode junction body 20, a body of electrodes connected together, and the current collecting members 30; and the battery case 40 and the lid member 50 constituting the exterior member having the housing chamber 41 housing the electrode junction body 20 and the current collecting members 30. The electrolytic solution T has not been injected into the housing chamber 41, and the housing chamber 41 is hermetically sealed, with its interior being in a low humidity state.

As mentioned above, the housing chamber 41 not filled with the electrolytic solution T is hermetically sealed in the low humidity state. During air transportation or the like, therefore, the limitation on the transport volume ascribed to the electrolytic solution T is not imposed. Thus, transportation by any transportation means including air transportation becomes possible, and the transportation can be performed with safety and in a short time.

After transportation of the lithium ion secondary battery structure 10, a lithium ion secondary battery can be produced easily by simply injecting the electrolytic solution T through the liquid injection port 53 of the lithium ion secondary battery structure 10, and sealing the liquid injection port 53.

Since the housing chamber 41 is hermetically sealed, with its interior in the low humidity state, the absorption of water contained in the gas within the housing chamber 41 into the electrode junction body 20 constituting the electrode connection body can be suppressed. When a lithium ion secondary battery is produced, its deficiency is suppressed, and the desired battery performance can be accomplished. Since the housing chamber 41 is hermetically sealed, with its interior in the low humidity state, moreover, the electrolytic solution T can be inhibited from containing water inside the housing chamber 41, when the electrolytic solution T is injected into the housing chamber 41 to produce a lithium ion secondary battery. Thus, deterioration in the performance of the lithium ion secondary battery can be suppressed.

With the lithium ion secondary battery structure 10 of the present embodiment, the battery case 40 and the lid member 50 constituting the exterior member preferably have the liquid injection port 53 through which the electrolytic solution T can be injected into the housing chamber 41, and the liquid injection port 53 is preferably sealed with the sealing member 80 which is a sealing material.

According to the above features, simply by removing the sealing material to unseal the liquid injection port 53, it becomes possible to inject the electrolytic solution T into the housing chamber 41 easily. In particular, the battery case 40 and the lid member 50 constituting the exterior member are adapted to have the liquid injection port 53. Since they can be formed in one place using the same mold as that for the lithium ion secondary battery for injecting the electrolytic solution T, therefore, the lithium ion secondary battery structure 10 can be provided, with cost increases being suppressed.

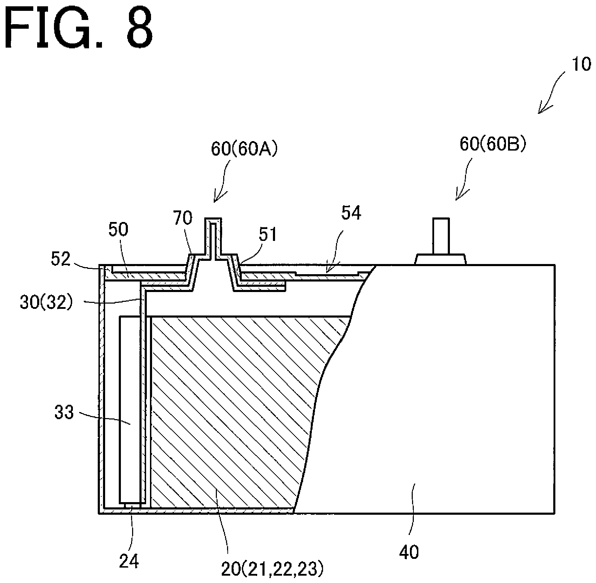

With the lithium ion secondary battery structure 10 of the present embodiment, the lid member 50 constituting the exterior member is provided with the liquid injection port 53, and the liquid injection port 53 is sealed with the sealing member 80. However, this configuration is not limitative. For example, the lid member 50 need not be provided with the liquid injection port 53, as shown in Fig. 8. That is, when the lithium ion secondary battery structure 10 is produced, tentative sealing of the liquid injection port 53 is not performed, and the electrode junction body housing step is performed in a low humidity environment, whereby the housing chamber 41 can be hermetically sealed, with its interior in a low humidity state.

When a lithium ion secondary battery is to be produced, the exterior member of the lithium ion secondary battery structure 10 may be formed with an opening portion (liquid injection port 53), and the electrolytic solution T may be injected through this opening portion as the liquid injection port 53. Incidentally, it is recommendable to perform the formation of the liquid injection port 53 under a low humidity environment. By so doing, the electrode junction body within the housing chamber 41 and the electrolytic solution T to be injected can be inhibited from containing water inside the housing chamber 41. At the time of newly forming the liquid injection port 53 in the exterior member, it is necessary to avoid the entry of metal swarf or the like into the housing chamber 41. For this purpose, in the present embodiment, the lid member 50 constituting the exterior member of the lithium ion secondary battery structure 10 is provided with a liquid injection port formation region 54 which is thinner than other regions and where the liquid injection port 53 (see Fig. 2) for injection of the electrolytic solution T is to be formed, as shown in Fig. 8. By forming the liquid injection port 53 in the liquid injection port formation region 54 mechanically or by heat melting or the like, the occurrence of metal swarf during the formation of the liquid injection port 53 is minimized, and the entry of metal swarf into the housing chamber 41 can be suppressed. As seen from the appearance of the battery case 40 and the lid member 50 constituting the exterior member, the liquid injection port formation region 54 is shaped as a concave portion as shown in Fig. 8, and an opening is formed in the concave portion. By so doing, the liquid injection port 53 can be formed reliably at a required site. Of course, the liquid injection port formation region 54 is not limited to the concave portion shown in Fig. 8, and may be shaped, for example, as a convex portion in which the thickness of the top surface of the convex is smaller than that of other regions of the lid member 50. Even if shaped like such a convex portion, the liquid injection port formation region 54 for formation of the liquid injection port 53 can be easily recognized from the appearance of the battery case 40 and the lip member 50 constituting the exterior member.

With the lithium ion secondary battery structure 10 shown in Fig. 8, as described above, the battery case 40 and the lid member 50 constituting the exterior member may be provided with the liquid injection port formation region 54 which is thinner than the other regions and where the liquid injection port 53 for injection of the electrolytic solution T is to be formed.

According to the above feature, the occurrence of metal swarf during the formation of the liquid injection port 53 is reduced, and the entry of metal swarf into the housing chamber 41 can be suppressed.

The liquid injection port formation region 54 is preferably a convex or concave portion provided in the battery case 40 and the lid member 50. According to this feature, the liquid injection port formation region 54 can be easily recognized as a region, where the liquid injection port 53 should be formed, from the appearance of the exterior member thanks to the convex or concave portion.

In the package 100 of the present embodiment, a plurality of the lithium ion secondary battery structures 10 are packed in a transportable manner.

By so configured as the package 100, the plurality of lithium ion secondary battery structures 10 can be transported efficiently.

The method for producing the lithium ion secondary battery structure 10 of the present embodiment is a method for producing the lithium ion secondary battery structure 10 comprising the electrode junction body 20, a body of electrodes connected together, and the current collecting members 30; and the battery case 40 and the lid member 50 constituting the exterior member provided with the housing chamber 41 capable of housing the electrode junction body 20 and the current collecting members 30 . This method includes a step of housing the electrode junction body 20 and the current collecting members 30 in the housing chamber 41, and hermetically sealing the housing chamber 41 in a low humidity environment, without injecting the electrolytic solution T into the housing chamber 41.

By so hermetically sealing the housing chamber 41 in the low humidity environment, without injecting the electrolytic solution T, the interior of the housing chamber 41 can be maintained in a low humidity state. During air transportation of the lithium ion secondary battery structure 10, therefore, the limitation on the transport volume ascribed to the electrolytic solution T is not imposed. Thus, transportation by any transportation means including air transportation becomes possible, and the transportation can be performed safely and in a short time.

By hermetically sealing the housing chamber 41, with its interior in a low humidity state, the inclusion of water in the housing chamber 41 can be suppressed. Even when the electrolytic solution is injected to produce a lithium ion secondary battery, its deficiency is suppressed, and the desired battery performance can be accomplished. Since the housing chamber 41 is hermetically sealed, with its interior in the low humidity state, moreover, the electrolytic solution T can be inhibited from containing water, when the electrolytic solution T is injected into the housing chamber 41 to produce a lithium ion secondary battery. Thus, deterioration in the performance of the lithium ion secondary battery can be suppressed.

According to the method for producing the lithium ion secondary battery structure 10 of the present embodiment, the battery case 40 and the lid member 50 constituting the exterior member preferably have the liquid injection port 53 permitting the injection of the electrolytic solution T. Preferably, the step of hermetically sealing the housing chamber 41 includes a step of housing the electrode junction body 20, a body of electrodes connected together, and the current collecting members 30 in the housing chamber 41, and a step of sealing the liquid injection port 53 for hermetic sealing, without injecting the electrolytic solution T into the housing chamber 41. The step of sealing the liquid injection port 53 is preferably performed in a low humidity environment.

According to the above features, when the liquid injection port 53 is sealed, the interior of the housing chamber 41 can be brought into a low humidity state. By simply sealing the liquid injection port 53, the low humidity state of the housing chamber 41 can be maintained easily.

According to the method for producing the lithium ion secondary battery structure 10 of the present embodiment, the step of housing the electrode junction body 20, a body of electrodes connected together, and the current collecting members 30 in the housing chamber 41 is preferably performed in a low humidity environment. By so performing the step of housing the electrode junction body 20 and the current collecting members 30 in the low humidity environment, the absorption of water by the electrode junction body 20 can be suppressed. When the structure is converted into a lithium ion secondary battery, its deficiency is suppressed, and the desired battery performance can be obtained.

The method for producing the lithium ion secondary battery of the present embodiment has a step of opening the housing chamber 41 of the lithium ion secondary battery structure 10 in a low humidity environment, the structure 10 comprising the electrode junction body 20 and the current collecting members 30, and the battery case 40 and the lid member 50 constituting the exterior member having the housing chamber 41 housing the electrode junction body 20 and the current collecting members 30, where the electrolytic solution T has not been injected into the housing chamber 41, and the housing chamber 41 has been hermetically sealed, with its interior in a low humidity state; injecting the electrolytic solution T into the housing chamber 41; and hermetically sealing the housing chamber 41.

By so opening the housing chamber 41 in the low humidity environment; injecting the electrolytic solution T into the housing chamber 41; and hermetically sealing the housing chamber 41, the inclusion of water in the electrolytic solution T can be suppressed, a deficiency in the lithium ion secondary battery can be suppressed, and the desired battery performance can be obtained.

According to the method for producing the lithium ion secondary battery of the present embodiment, preferably, the battery case 40 and the lid member 50 constituting the exterior member preferably have the pre-sealed liquid injection port 53 for injecting the electrolytic solution T; the opening of the housing chamber 41 under the low humidity environment unseals the liquid injection port 53; the injection of the electrolytic solution T into the housing chamber 41 is performed through the liquid injection port 53; and the hermetic sealing of the housing chamber 41 is the sealing of the liquid injection port 53. According to these features, the housing chamber 41 can be opened by the easy step of unsealing the liquid injection port 53, and the electrolytic solution T can be easily injected through the liquid injection port 53. Simply by sealing the liquid injection port 53, moreover, the housing chamber 41 can be easily hermetically sealed. In particular, the battery case 40 and the lid member 50 constituting the exterior member having the liquid injection port 53 can be used in the same manner as are the conventional ones. Thus, there is no need to provide two types of molds for formation of the battery case 40 and the lid member 50 constituting the exterior member, namely, a mold with the liquid injection port 53 and a mold without it. Hence, cost increases can be suppressed.

According to the method for producing a lithium ion secondary battery with the use of the lithium ion secondary battery structure 10 shown in Fig. 8, the opening of the housing chamber 41 under the low humidity environment is the formation of the liquid injection port 53, an opening portion through which the electrolytic solution T can be injected, in the battery case 40 and the lid member 50 constituting the exterior member; the injection of the electrolytic solution T into the housing chamber 41 is performed through the liquid injection port 53 as the opening portion; and the hermetic sealing of the housing chamber 41 is the sealing of the liquid injection port 53 as the opening portion. This new formation of the liquid injection port 53 makes it possible to inject the electrolytic solution T into the housing chamber 41. In this case, it is advisable to use the battery case 40 and the lid member 50 constituting the exterior member having the liquid injection port formation region 54, a region for serving as the liquid injection port 53 and smaller in thickness than other parts . Particularly, so that the region to serve as the liquid injection port 53 is recognizable from the appearance of the battery case 40 and the lid member 50 constituting the exterior member, the liquid injection port formation region 54 is desirably a convex or concave portion.

### (Embodiment 2)

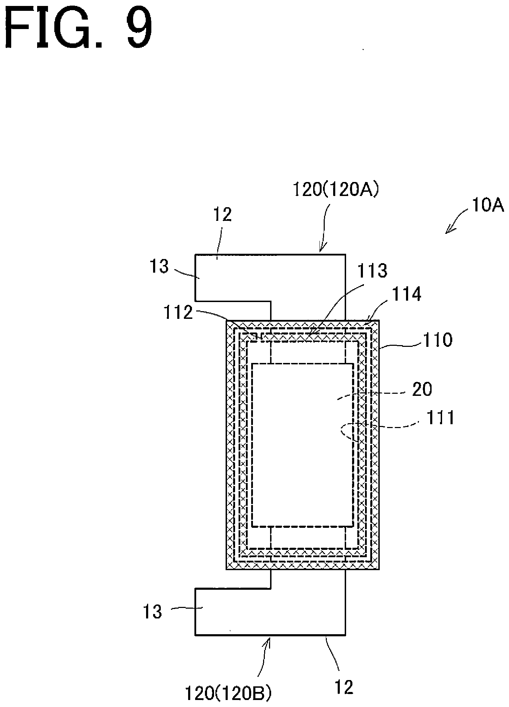

Fig. 9 is a plan view of a lithium ion secondary battery structure according to Embodiment 2 of the present invention. The same members as those in the foregoing embodiment are assigned the same numerals as in the above embodiment, and repeated explanations are omitted.

As shown in Fig. 9, a lithium ion secondary battery structure 10A of the present embodiment is a battery structure comprising an electrode junction body 20 surrounded with and sealed with a laminate film 110 which is an exterior member. Thus, the electrode junction body 20 is enclosed within a housing chamber 111 made of the laminate film 110. The laminate film 110 comprises a synthetic resin film, and its front and rear surfaces comprise an insulating material. Apart of a pair of tab leads 120 connected to the electrode junction body 20 covered with the laminate film 110 is provided to protrude from an opening portion. One of the tab leads 120 (designated as 120A) is a positive electrode tab lead, and the other one (designated as 120B) is a negative electrode tab lead. The two tab leads 120 shown in Fig. 9 are connected to a current collector on a positive electrode side and a current collector on a negative electrode side at the ends of the electrode junction body 20 within the housing chamber 111.

The outer periphery of the laminate film 110 is provided with a first sealing region 113 for sealing parts other than the site of a liquid injection port 112 for injection of an electrolytic solution T into the housing chamber 111, and a second sealing region 114 for sealing the entire outer periphery of the laminate film 110 outwardly of the first sealing region 113.

The electrolytic solution T has not been injected into the housing chamber 111 made of the laminate film 110, and the housing chamber 111 is hermetically sealed, with its interior in a low humidity state.

The low humidity state inside the housing chamber 111 refers, for example, to a highly dry state at a dew-point temperature of -20°C or lower. The housing chamber 111 is hermetically sealed, with its interior in the low humidity state, as noted above . Thus, the electrode junction body 20 is inhibited from absorbing water contained in the gas present within the housing chamber 111, and a deficiency in a lithium ion secondary battery as a final product can be suppressed to obtain the desired battery performance. Besides, the housing chamber 41 is hermetically sealed, with its interior in the low humidity state, so that when an electrolytic solution T is injected into the housing chamber 111 to produce a lithium ion secondary battery, incorporation of water inside the housing chamber 111 into the electrolytic solution T can be suppressed, and deterioration in the performance of the lithium ion secondary battery can be suppressed.

The gas accommodated in the housing chamber 111 is not limited, as long as it is in a low humidity state. For example, it may be air, or an inert gas such as nitrogen or a rare gas may be charged into the housing chamber. By charging the inert gas into the housing chamber 111, for example, inclusion of water in the housing chamber 111 can be suppressed more reliably, and a deterioration in the battery performance can be suppressed.

The interior of the housing chamber 111 may be at a pressure lower than atmospheric pressure (1 Pa) (i.e., a negative pressure) . By so placing the interior of the housing chamber 111 at the pressure lower than atmospheric pressure (i.e., negative pressure), a deficiency such as breakage of the laminate film 110 due to an air pressure difference can be suppressed during transportation under a low pressure environment with the use of an aircraft or the like.

That is, the housing chamber 111 may be sealed, with its interior in an evacuated state. In other words, the interior of the housing chamber 111 may be in a vacuum state. The vacuum state refers, for example, to a state at a pressure of 1 Pa or lower, preferably 0.1 Pa or lower. Since the interior of the housing chamber 41 is evacuated, the occurrence of problems, which can be caused by the air pressure difference during air transportation, is suppressible.

With the lithium ion secondary battery structure 10A having the above features, the electrolytic solution T is not injected into the housing chamber 111, and the housing chamber 111 is hermetically sealed, with its interior in a low humidity state. Hence, the limitation on transportation ascribed to the electrolytic solution T is not imposed during air transportation or the like, the structure 10A can be transported by any transportation means including air transportation, and the transportation can be performed with safety and in a short time.

After transportation of the lithium ion secondary battery structure 10A of the present embodiment, moreover, a part of the second sealing region 114 of the laminate film 110 of the lithium ion secondary battery structure 10A (i.e., the part in the vicinity of the liquid injection port 112) is opened to expose the liquid injection port 112, and the electrolytic solution T is injected through the liquid injection port 112. Then, the liquid injection port 112 is sealed to seal the entire first sealing region 113, and the part of the second sealing region 114 that has been unsealed again is also re-sealed to seal the whole of the second sealing region 114. In this manner, a lithium ion secondary battery can be produced easily.

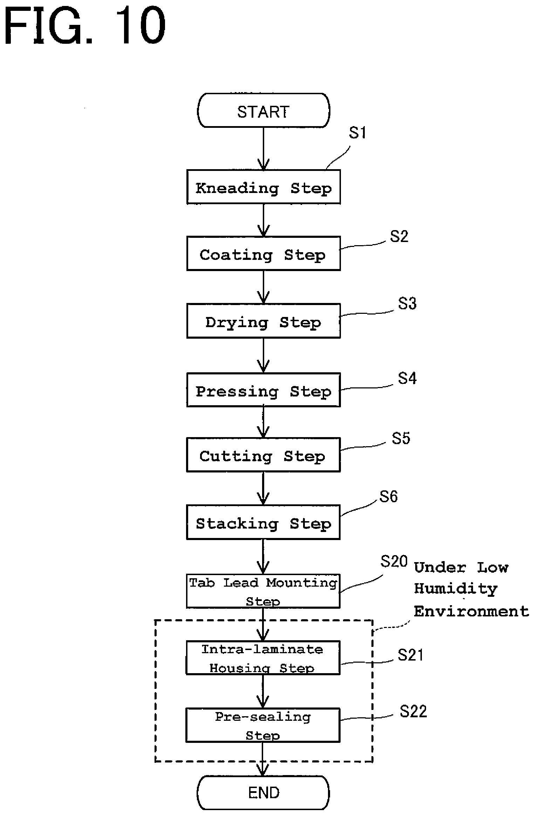

A method for producing the lithium ion secondary battery structure 10A of the present embodiment will be described by reference to Fig. 10. Fig. 10 is a flowchart for explaining the method for producing the lithium ion secondary battery structure according to Embodiment 2.

The electrode junction body 20 having positive electrode plates, separators, and negative electrode plates superposed is formed by the same steps as Steps S1 to S6 of Embodiment 1 described earlier, namely, the kneading step, the coating step, the drying step, the pressing step, the cutting step, and the stacking step. Then, in a tab lead mounting step as Step S20, the tab leads 120 are connected to the current collector on the positive electrode side and the current collector on the negative electrode side of the electrode junction body 20. The tab leads 120 finally serve as external terminals.

Then, in an intra-laminate housing step as Step S21, the electrode junction body 20 with the tab leads 120 connected thereto is housed in the laminate film in the following manner: The electrode junction body 20 including sites of junction with the tab leads 120 is covered with the laminate film 110 as if being wrapped therein. The periphery of the laminate film 110 is joined such that the liquid injection port 112 remains intact. In this manner, the first sealing region 113 is formed.

Then, in a pre-sealing step as Step S22, the outside of the first sealing region 113 of the laminate film 110 is sealed throughout to form the second sealing region 114. By so doing, the lithium ion secondary battery structure 10A having the liquid injection port 112 sealed can be produced.

In the present embodiment, the intra-laminate housing step as Step S21 and the pre-sealing step as Step S22 are performed in a low humidity environment, whereby the laminate film 110 can be hermetically sealed, with the interior of the housing chamber 111 in a low humidity state. Incidentally, a method of hermetically sealing the laminate film 110 under the low humidity environment can be exemplified by disposing a hermetic sealing device, which hermetically seals the laminate film 110, in a dry room adjusted to a low humidity state, and joining the laminate film 110 in the hermetic sealing device within the dry room to effect hermetic sealing, or bringing the space of the hermetic healing device, which is to be hermetically sealed, into a low humidity state and joining the laminate film. At this time, can should be taken to make sure that the low humidity state is maintained from the intra-laminate housing step as Step S21 until the pre-sealing step as Step S22. For example, see to it that the intra-laminate housing step as Step S21 and the pre-sealing step as Step S22 are performed continuously in the same low humidity environment (within the same dry room). If at least one of the intra-laminate housing step as Step S21 and the pre-sealing step as Step S22 is performed using a device not in a low humidity environment (outside the dry room) (necessary treatment is performed, with the interior of the device in a low humidity state), the environment surrounding the objects to be treated is to be maintained in a low humidity state even during transportation of the objects (to be treated) midway between these two steps. By the way, the term "under or in a (the) low humidity environment" refers, for example, to a highly dry state at a dew-point temperature of -20°C or lower. The type of the gas in the low humidity environment is not limited, and may be air, or an inert gas such as nitrogen or a rare gas.

In the present embodiment, the intra-laminate housing step and the pre-sealing step are performed in the low humidity environment. However, it is desirable, at least, that after the drying step as Step S3 in Fig. 10, all of the steps for production of the lithium ion secondary battery structure 10A shown in Fig. 10 be carried out in a low humidity environment, and that the steps to be performed in the low humidity environment be performed in the same dry room. In charging an inert gas into the housing chamber 111, moreover, it is recommendable that the method of charging an inert gas, such as nitrogen, into the housing chamber 111 be an optimum method conformed to the aforementioned method of sealing. For example, it is advisable that the process, starting with the intra-laminate housing step, be performed in a low humidity environment and in an inert gas atmosphere. If the pre-sealing step is needed thereafter (if the liquid injection port 112 is formed in the laminate film 110), the process up to this pre-sealing step may be performed in a low humidity environment and in an inert gas atmosphere. In addition, if the pre-sealing step is needed thereafter (if the liquid injection port 112 is formed in the laminate film 110), the inert gas atmosphere need not be used in the intra-laminate housing step and, during the pre-sealing in which the liquid injection port 112 itself is to be pre-sealed, an inert gas may be forcibly introduced into the housing chamber 111 made of the laminate film 110 through the liquid injection port 112. In this case, an exhaust port within the housing chamber 111 needs to be provided separately from the liquid injection port 112 (this exhaust port also needs to be pre-sealed as is the liquid injection port 112). If the lithium ion secondary battery structure 10A itself is to be sealed with the sealer, it is recommendable to introduce an inert gas forcibly into the space of the sealer housing the lithium ion secondary battery structure 10A, before sealing it with the sealer completely.

The so produced lithium ion secondary battery structure 10A, as in the aforementioned Embodiment 1, can be easily transported as a package 100, with a plurality of the structures 10A being housed in one packing case 101.

A method of producing a lithium ion secondary battery using the above lithium ion secondary battery structure 10A is the same as in the aforementioned Embodiment 1. Thus, the method will be described by reference to Fig. 7 of Embodiment 1.

As shown in Fig. 7, in an opening step as Step S10 for the liquid injection port 112, a part of the second sealing region 114 (i.e., the part in the vicinity of the liquid injection port 112) is opened to expose the liquid injection port 112. In the present embodiment, a part of the second sealing region 114 of the lithium ion secondary battery structure 10A is unsealed to expose the liquid injection port 112.

Then, in a liquid injection step as Step S11, an electrolytic solution T is injected into the housing chamber 111 through the liquid injection port 112 of the lithium ion secondary battery structure 10A.

Then, formation charging (not shown) is performed. When this formation charging is performed, the liquid injection port 112 has not yet been sealed, so that a gas generated by the formation charging is exhausted to the outside of the housing chamber 111 through the liquid injection port 112. In a regular sealing step as Step S12, the liquid injection port 112 is sealed to hermetically seal the housing chamber 111, and the unsealed part of the second sealing region 114 is sealed again to produce a lithium ion secondary battery.

Then, in a charging/discharging inspection step as Step S13, an inspection such as charging/discharging inspection is conducted. The product, which has undergone this inspection and fulfills predetermined criteria, is shipped as a lithium ion secondary battery.

In the above manufacturing process for the lithium ion secondary battery, Steps S10 to S12, namely, the opening step for the liquid injection port 112, the liquid injection step, and the regular sealing step, are performed in a low humidity environment. Incidentally, the term "under or in a (the) low humidity environment" refers, for example, to a highly dry state at a dew-point temperature of -20°C or lower. The type of the gas in the low humidity environment is not limited, and may be air, or an inert gas such as nitrogen or a rare gas.

As noted above, the opening step for the liquid injection port 112, the liquid injection step, and the regular sealing step are performed in the low humidity environment. As a result, the housing chamber 111 is hermetically sealed, with its interior in a low humidity state. Thus, the absorption of water inside the housing chamber 111 by the electrode junction body 20 can be suppressed. Hence, a deficiency in the resulting lithium ion secondary battery is suppressed finally, and the desired battery performance can be obtained. Furthermore, the incorporation of water inside the housing chamber 111 into the electrolytic solution within the housing chamber 111 can be suppressed, and a deterioration in the performance of the lithium ion secondary battery can be suppressed.

The lithium ion secondary battery structure 10A in which the electrolytic solution T has not been injected and the housing chamber 111 is in the low humidity state is transported from Factory X to Factory Y. In air transportation or the like, therefore, the volume of transport is not restricted, and transportation can take place safely. Consequently, as compared with the transportation of the lithium ion secondary battery, with the electrolytic solution T injected, from Factory X to Factory Y, safe transportation can be done in fewer days of transportation with the use of air transportation or the like.

With the lithium ion secondary battery structure 10A of the present embodiment, the laminate film 110 constituting the exterior member is provided with the liquid injection port 112, and the laminate film is joined at the liquid injection port 112 and in the second sealing region 114 outside the liquid injection port 112, whereby the liquid injection port 112 is sealed. However, this configuration is not limitative. For example, the lithium ion secondary battery structure 10A may be provided with the second sealing region 114 alone, rather than being provided with the liquid injection port 112 and the first sealing region 113. In this case, it suffices to seal the entire second sealing region 114 during preparation of the lithium ion secondary battery structure 10A; and in the liquid injection step for production of a lithium ion secondary battery, a part of the second sealing region 114 may be unsealed to form a liquid injection port. Alternatively, without unsealing of the part of the second sealing region 114, a needle for liquid pouring such as an injection needle may be used to inject the electrolytic solution T into the housing chamber 111. After injection of the electrolytic solution, the unsealed part of the second sealing region 114 may be sealed again. If liquid injection is performed using the liquid pouring needle without unsealing, the site of insertion of the liquid pouring needle in the laminate film 110 may be closed, for example, by sticking thereon an insulating tape having a strong adhesion and difficult to peel off. The provision of only the second sealing region 114 is advantageous in that there are fewer sites of sealing, thus resulting in fewer steps to be done, and there are fewer regions for sealing, so that the shape of a laminate cell as a final product can itself be rendered small. However, the portion corresponding to the liquid injection port 112 is unsealed, and sealed again. Depending on the material for the laminate film, therefore, the portion corresponding to the liquid injection port 112 and its surrounding parts are sometimes apt to break. The provision of the first sealing region 113, on the other hand, is free from such a problem. Since sealing is done with the first sealing region 113 and the second sealing region 114, moreover, the hermetic sealing properties of the housing chamber 111 can be enhanced, and the intrusion of water from outside can be suppressed in a dual manner.

As explained above, the lithium ion secondary battery structure 10A of the present embodiment comprises the electrode junction body 20, which is a body of electrodes connected together, and the tab leads 120; and the laminate film 110 constituting the exterior member having the housing chamber 111 housing the electrode junction body 20 and the tab leads 120. The electrolytic solution T has not been injected into the housing chamber 111, and the housing chamber 111 is hermetically sealed, with its interior being in a low humidity state.

As mentioned above, the housing chamber 111 not filled with the electrolytic solution T is hermetically sealed in the low humidity state. During air transportation or the like, therefore, the limitation on the transport volume ascribed to the electrolytic solution T is not imposed. Thus, transportation by any transportation means including air transportation becomes possible, and the transportation can be performed with safety and in a short time.

After transportation of the lithium ion secondary battery structure 10A, a lithium ion secondary battery can be produced easily by simply injecting the electrolytic solution T through the liquid injection port 112 of the lithium ion secondary battery structure 10A, and sealing the liquid injection port 112.

Since the housing chamber 111 is hermetically sealed, with its interior in the low humidity state, the absorption of water contained in the gas within the housing chamber 111 into the electrode junction body 20 can be suppressed. When the lithium ion secondary battery is produced finally, its deficiency is suppressed, and the desired battery performance can be accomplished. Since the housing chamber 111 is hermetically sealed, with its interior in the low humidity state, moreover, the electrolytic solution T can be inhibited from containing water present inside the housing chamber 111, when the electrolytic solution T is injected into the housing chamber 111 to produce a lithium ion secondary battery. Thus, deterioration in the performance of the lithium ion secondary battery can be suppressed.

With the lithium ion secondary battery structure 10A of the present embodiment, moreover, the laminate film 110 constituting the exterior member preferably has the liquid injection port 112 through which the electrolytic solution T can be injected into the housing chamber 111, and the liquid injection port 112 is preferably sealed.

According to the above features, simply by unsealing the liquid injection port 112, it becomes possible to inject the electrolytic solution T into the housing chamber 111 easily.

The package 100 of the present embodiment has a plurality of the lithium ion secondary battery structures 10A packed in a transportable manner.

By so configured as the package 100, the plurality of lithium ion secondary battery structures 10A can be transported efficiently.

The method for producing the lithium ion secondary battery structure 10A of the present embodiment is a method for producing the lithium ion secondary battery structure 10A comprising the electrode junction body 20, a body of electrodes connected together, and the tab leads 120; and the laminate film 110 constituting the exterior member having the housing chamber 111 capable of housing the electrode junction body 20 and the tab leads 120. This method includes a step of housing the electrode junction body 20 and the tab leads 120 in the housing chamber 111, and hermetically sealing the housing chamber 111 in a low humidity environment, without injecting the electrolytic solution T into the housing chamber 111.

By so hermetically sealing the housing chamber 111 in the low humidity environment, without injecting the electrolytic solution T, the interior of the housing chamber 111 can be maintained in a low humidity state. During air transportation of the lithium ion secondary battery structure 10A, therefore, the limitation on transportation ascribed to the electrolytic solution T is not imposed. Thus, transportation by any transportation means including air transportation becomes possible, and the transportation can be performed safely and in a short time.

By hermetically sealing the housing chamber 111, with its interior in a low humidity state, the absorption of water contained in the gas within the housing chamber 111 into the electrode junction body 20 can be suppressed. When a lithium ion secondary battery is produced finally, its deficiency is suppressed, and the desired battery performance can be accomplished. Since the housing chamber 111 is hermetically sealed, with its interior in the low humidity state, moreover, the electrolytic solution T can be inhibited from containing water present inside the housing chamber 111, when the electrolytic solution T is injected into the housing chamber 111 to produce a lithium ion secondary battery. Thus, deterioration in the performance of the lithium ion secondary battery can be suppressed.

According to the method for producing the lithium ion secondary battery structure 10A of the present embodiment, the laminate film 110 constituting the exterior member preferably has the liquid injection port 112 permitting the injection of the electrolytic solution T. Preferably, the step of hermetically sealing the housing chamber 111 includes a step of housing the electrode junction body 20, a body of electrodes connected together, and the tab leads 120 in the housing chamber 111, and a step of sealing the liquid injection port 112 for hermetic sealing, without injecting the electrolytic solution T into the housing chamber 111. The step of sealing the liquid injection port 112 is preferably performed in a low humidity environment.

According to the above features, when the liquid injection port 112 is sealed, the interior of the housing chamber 111 can be brought into a low humidity state. By simply sealing the liquid injection port 112, moreover, the low humidity state of the housing chamber 111 can be maintained easily.

According to the method for producing the lithium ion secondary battery structure 10A of the present embodiment, the step of housing the electrode junction body 20, a body of electrodes connected together, and the tab leads 120 is preferably performed in a low humidity environment. By so performing the step of housing the electrode junction body 20 and the tab leads 120 in the low humidity environment, the absorption of water by the electrode junction body 20 can be suppressed. When the structure is finally formed into a lithium ion secondary battery, its deficiency is suppressed, and the desired battery performance can be obtained.

The method for producing the lithium ion secondary battery of the present embodiment has a step of opening the interior of the housing chamber 111 of the lithium ion secondary battery structure 10A in a low humidity environment, the structure 10A comprising the electrode junction body 20, a body of electrodes connected together, and the tab leads 120, and the laminate film 110 constituting the exterior member having the housing chamber 111 housing the electrode junction body 20 and the tab leads 120, where no electrolytic solution T has been injected into the housing chamber 111, and the housing chamber 111 has been hermetically sealed, with its interior in a low humidity state; injecting the electrolytic solution T into the housing chamber 111; and hermetically sealing the housing chamber 111.

By so opening the housing chamber 111 under the low humidity environment; injecting the electrolytic solution T into the housing chamber 111; and hermetically sealing the housing chamber 111, the inclusion of water in the electrolytic solution T can be suppressed, a deficiency in the lithium ion secondary battery as a final product can be suppressed, and the desired battery performance can be obtained.

According to the method for producing the lithium ion secondary battery of the present embodiment, preferably, the laminate film 110 constituting the exterior member has the liquid injection port 112 permitting the injection of the electrolytic solution T; the opening of the housing chamber 111 under the low humidity environment opens the liquid injection port 112; the injection of the electrolytic solution T into the housing chamber 111 is performed through the liquid injection port 112; and the hermetic sealing of the housing chamber 111 is the sealing of the liquid injection port 112. According to these features, the housing chamber 111 can be opened by the easy step of unsealing the liquid injection port 112, and the electrolytic solution T can be easily injected through the liquid injection port 112. Simply by sealing the liquid injection port 112, moreover, the housing chamber 111 can be easily sealed hermetically.

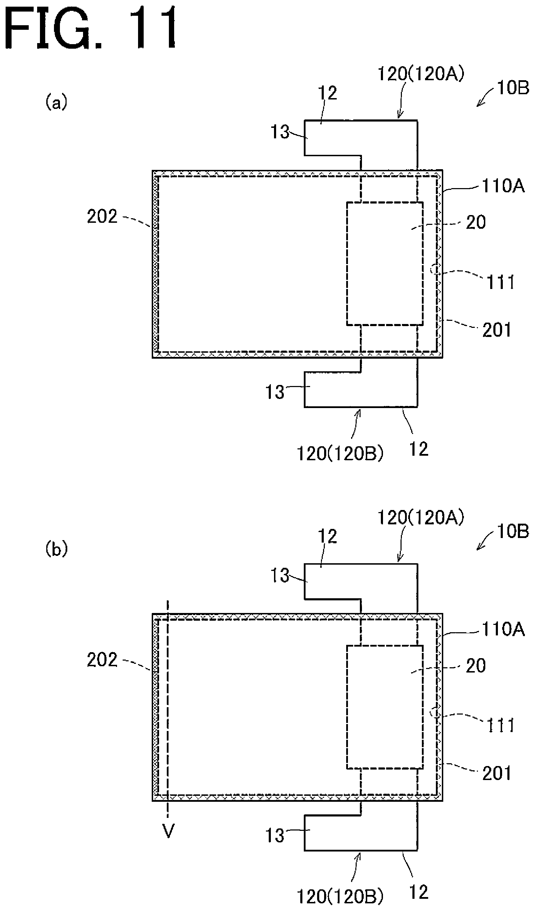

A modification of the lithium ion secondary battery structure using a laminate film as an exterior member of the present embodiment, and a method for producing a lithium ion secondary battery therefrom will be described by reference to Figs. 11(a), 11(b) to Fig. 13.

As shown in Fig. 11(a), a lithium ion secondary battery structure 10B has a laminate film 110A as an exterior member, and an electrode junction body 20 is enclosed within a housing chamber 111 made of the laminate film 110A.

Three sides of the outer periphery of the laminate film 110A are sealed with a sealing region 201, with the electrode junction body 20 housed in the housing chamber 111, and the other side of the outer periphery is pre-sealed with a sealing region 202, with the interior of the housing chamber 111 defined by the laminate film 110 being placed in a low humidity state. This state corresponds to the lithium ion secondary battery structure 10B of the present invention.

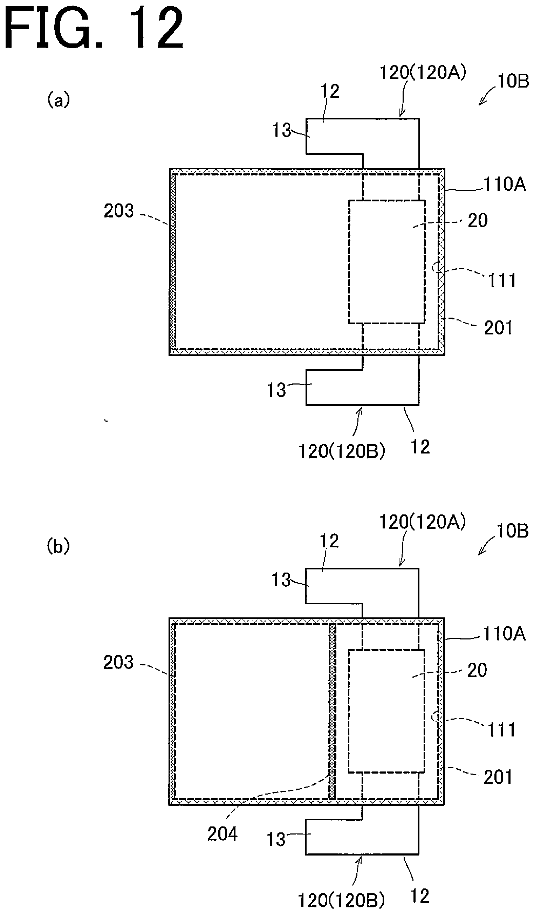

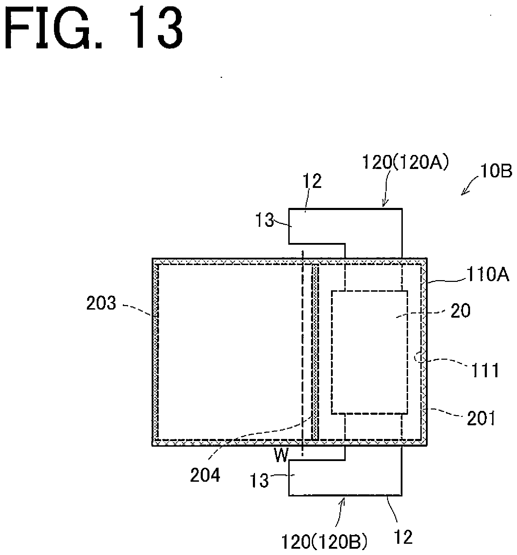

Such a lithium ion secondary battery structure 10B is subjected to the following procedure at the destination of transportation: As shown in Fig. 11(b), the laminate film 110A is cut in a low humidity environment at a position indicated by a broken line V to unseal the laminate film 110A, and an electrolytic solution is injected into the housing chamber 111 of the laminate film 110A. After the injection of the electrolytic solution is completed, the laminate film is sealed with a sealing region 203 in the low humidity environment, with the interior being sufficiently deaerated, as shown in Fig. 12 (a). Further, as shown in Fig. 12(b), the laminate film is sealed with a sealing region 204 so that it is formed into a desired size. Then, as shown in Fig. 13, the laminate film 110A is cut at a position indicated by a broken line W, whereby a laminated lithium ion secondary battery is prepared. The treatment in Fig. 12(b) may be performed, or need not be performed, under a low humidity environment.

Even with the lithium ion secondary battery structure 10B having the above features, the housing chamber 111 where the electrolyticsolution hasnotbeeninjectedis hermetically sealed in a low humidity state. Hence, the limitation on the transport volume ascribed to the electrolytic solution is not imposed during air transportation or the like, the structure 11B can be transported by any transportation means including air transportation, and the transportation can be performed with safety and in a short time. After transportation of the lithium ion secondary battery structure 10B, moreover, an electrolytic solution is injected into the housing chamber 111 of the lithium ion secondary battery structure 10B, and the housing chamber is sealed with the sealing region 203 or 204. Simply by so doing, a lithium ion secondary battery can be easily produced.

Furthermore, the housing chamber 111 is hermetically sealed, with its interior in a low humidity state. Thus, the incorporation of water inside the housing chamber 111 into the electrolytic solution can be suppressed and, when a lithium ion secondary battery is produced, its deficiency is suppressed, and the desired battery performance can be obtained.

### (Embodiment 3)

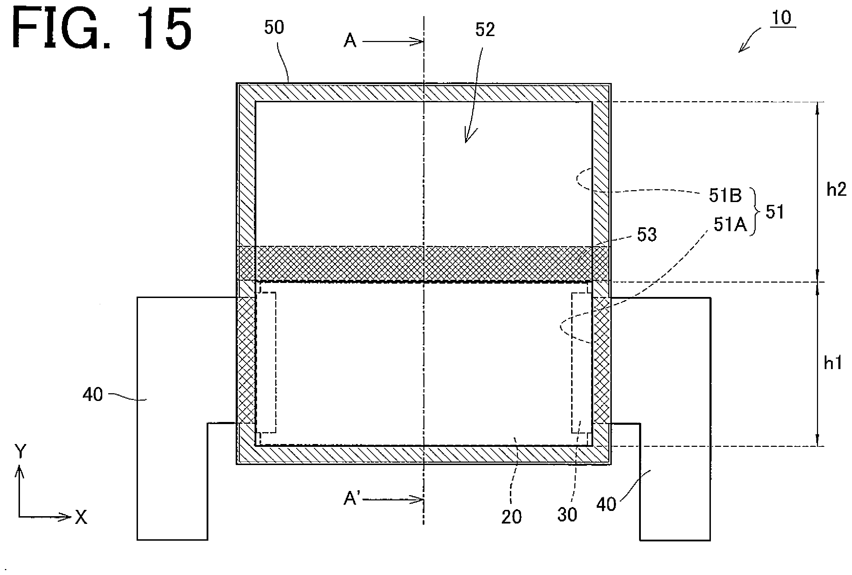

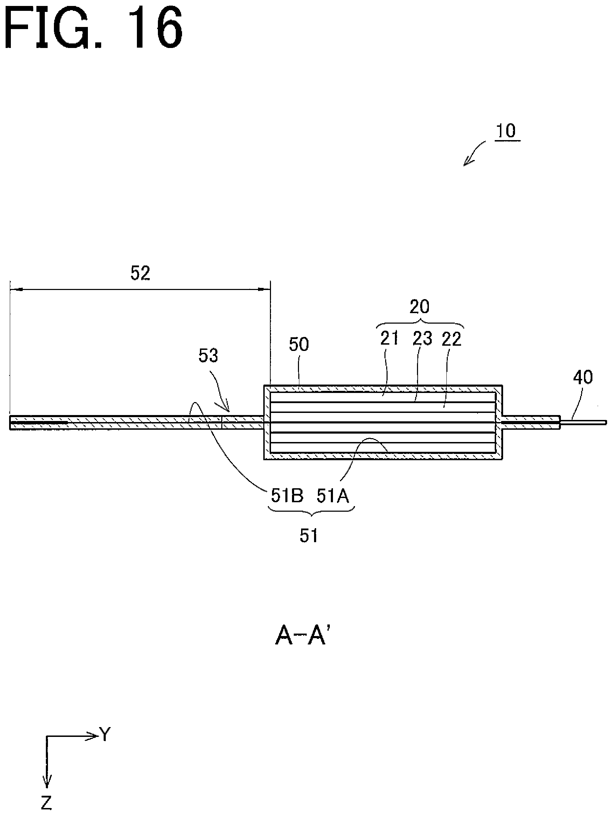

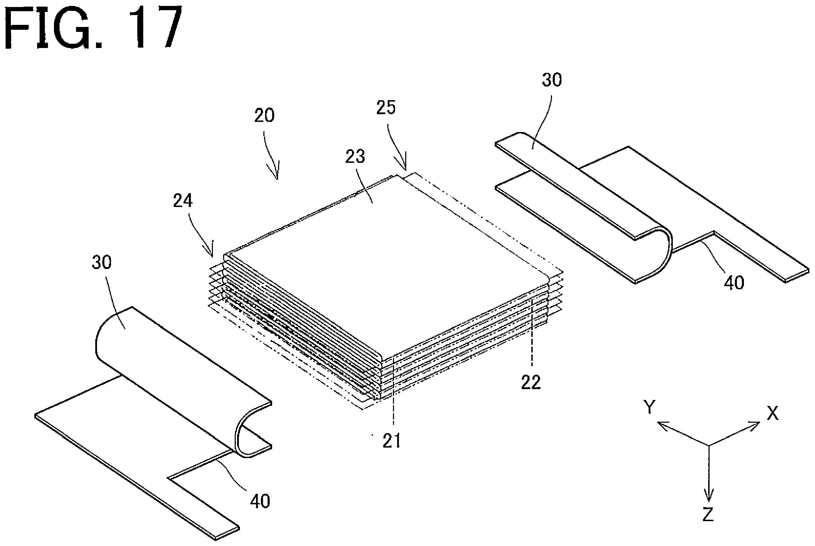

Fig. 14 is aperspective view of a lithium ion secondary battery structure which is an example of the nonaqueous electrolyte secondary battery structure according to Embodiment 3 of the present invention. Fig. 15 is a plan view of a lithium ion secondary battery structure. Fig. 16 is a sectional view taken on line A-A' in Fig. 15. Fig. 17 is an exploded perspective view of an electrode junction body and an external electrode terminal.

The nonaqueous electrolyte secondary battery structure of the present embodiment is a lithium ion secondary battery structure for use in a lithium ion secondary battery. A lithium ion secondary battery structure 10 of the present embodiment, as shown in Figs. 14 to 16, comprises an electrode junction body 20 which is an electrode group; a pair of tab leads 40, which are external electrode terminals, connected to the electrode junction body 20 via clips 30; and a laminate film 50 which is an exterior member housing the electrode junction body 20, the clips 30, and parts of the tab leads 40.

The electrode junction body 20, the clip 30, and the tab lead 40 of the present embodiment will be described further by reference to Fig. 17.

The electrode junction body 20 has a positive electrode plate 21 and a negative electrode plate 22 as its electrode plates . Each of the positive electrode plate 21 and the negative electrode plate 22 comprises an electrode active material layer formed on a metal foil. The metal foil used in the positive electrode plate 21 is, for example, an aluminum foil. As the metal foil used in the negative electrode plate 22, a copper foil, for example, is named.

The positive electrode plates 21 and the negative electrode plates 22 are inserted into respective furrows of a zigzag-folded separator 13, as an insulator, so as to face each other, with each fold of the separator being sandwiched between the positive electrode plate 21 and the negative electrode plate 22. The so gathered positive electrode plates and negative electrode plates are pressed from above and from below and thereby formed into the electrode junction body 20 of a stacked structure.

At one end in an X-direction, a width direction, of the electrode junction body 20, there is provided a positive electrode side connection portion 24 which defines the end of each of a plurality of the positive electrode plates 21 and where no electrode active material layer is formed. At the other end in the X-direction, the width direction, of the electrode junction body 20, there is provided a negative electrode side connection portion 25 which defines the end of each of a plurality of the negative electrode plates 22 and where no electrode active material layer is formed. The positive electrode side connection portion 24 and the negative electrode side connection portion 25 are provided to protrude from both ends in the X-direction, the width direction, of the separator 23.

The clips 30 are provided for the positive electrode side connection portion 24 and the negative electrode side connection portion 25, and joined thereto.

The clip 30 is adapted to combine a plurality of the positive electrode side connection portions 24 and a plurality of the negative electrode side connection portions 25, and is formed by bending a rectangular flat plate made of a metal.

To the clip 30 connected to the positive electrode side connection portion 24, the tab lead 40 is connected which is the external electrode terminal on the positive electrode side and composed of an electroconductive material. To the clip 30 connected to the negative electrode side connection portion 25, the tab lead 40 is connected which is the external electrode terminal on the negative electrode side.

In the present embodiment, the clips 30 are provided for the electrode junction body 20. However, this is not limiting, and the tab lead 40 on the positive electrode side may be connected directly to the positive electrode side connection portion 24, and the tab lead 40 on the negative electrode side may be connected directly to the negative electrode side connection portion 25. Alternatively, the clip 30 may be used on only one of the positive electrode side connection portion 24 and the negative electrode side connection portion 25.

As shown in Figs. 14 to 16, the laminate film 50 as the exterior member of the lithium ion secondary battery structure 10 is composed of a filmy material, for example, a composite film comprising a laminate of a plurality of resin films, or comprising a plurality of resin films and metal films laminated together, and the front and rear surfaces of the laminate film 50 are composed of an insulating material. In the present embodiment, two of the laminate films 50 are superposed in a Z-direction, and their outer peripheries are joined together continuously over the circumferential direction, whereby an internal space 51 housing the electrode junction body 20 inside is provided.

Parts of the paired tab leads 40 connected to the electrode junction body 20 covered with the laminate films 50 are provided to penetrate outward from the internal space 51 defined by the laminate films 50. That is, the tab lead 40 is led to the outside from the internal space 51 of the laminate film 50. A gap between the surroundings of an opening portion (not shown) for leading the tab lead 40 to the outside from the internal space 51 of the laminate film 50 and the tab lead 40 partly protruding from this opening portion is sealed, for example, with a sealant layer for use in pressure bonding so that the internal space 51 and the outside do not communicate through this opening portion. Thus, the laminate film 50 surrounds the entire circumference of the electrode junction body 20 within the internal space 51, and the internal space 51 does not communicate with the outside. The sealant layer joining the tab lead 40 and the laminate film 50 is formed on the surface of the tab lead 40. As such a sealant layer, for example, a thermoplastic resin such as polypropylene (PP), polyethylene (PE), polystyrene (PS), polyethylene terephthalate (PET), or modified PP is used. The sealant layer may be provided as a single layer alone, or as a plurality of (two or more) layers. If a plurality of the sealant layers are to be provided, they may be formed from the same material, or different materials, or may be a combination of modified resins of the same material. By fusion bonding the sealant layer formed on the tab lead 40 and the resin of the laminate film 50, water such as outside moisture can be inhibited from entering inside through the clearance between the tab lead 40 and the laminate film 50. When an electrolytic solution as an electrolyte is injected inward, moreover, the electrolytic solution can be inhibited from leaking outside through the clearance between the tab lead 40 and the laminate film 50.

The other end of the tab lead 40 on the side opposite to one end thereof connected to the electrode junction body 20, namely, the end provided outside the laminate film 50, is extended toward the side opposite to an electrolyte introduction portion 51B in a Y-direction in which the electrolyte introduction portion 51B and a housing chamber 51A (both of them will be described in detail later) are arranged side by side. That is, when viewed in a plan view from the Z-direction, the tab lead 40 is provided in a so-called L shape in which it is extended in the X-direction from the electrode junction body 20 and is also extended in the Y-direction. By so doing, as will be described in detail later, at the time of performing a hermetic sealing step of closing a part of the electrolyte introduction portion 51B to hermetically seal the housing chamber 51A, the other end of the tab lead 40 presents no obstacle, so that the nearest part of the electrolyte introduction portion 51B to the housing chamber 51A can be easily closed. Of course, the tab lead 40 may be extended to have the other end thereof bent toward the electrolyte introduction portion 51B. However, if the other end of the tab lead 40 is extended toward the electrolyte introduction portion 51B, the other end of the tab lead 40 presents an obstacle during the hermetic sealing step, and the side of the electrolyte introduction portion 51B near the housing chamber 51A may be difficult to close.

The other end of the tab lead 40 is bent so as to overlap the part, where the electrode junction body 20 is housed, in the Z-direction, and is connected to the external terminal, when a lithium ion secondary battery is produced. For this purpose, the other end of the tab lead 40 preferably has a length protruding in the Y-direction as compared with the laminate film 50. Because of this feature, when the tab lead 40 is bent, the other end of the tab lead 40 is allowed to protrude beyond the outer periphery of the laminate film 50 and can thus become connectable to the external terminal more easily.

The laminate film 50, the exterior member, is extended toward one side in the Y-direction, perpendicular to the X-direction, from the region where the electrode junction body 20 is housed. The end of the laminate film 50 extended toward the one side in the Y-direction is sealed in the same manner as for the other outer peripheral parts.

The internal space 51 of the laminate film 50 mentioned above comprises the housing chamber 51A and the electrolyte introduction portion 51B. In the present embodiment, the housing chamber 51A and the electrolyte introduction portion 51B are arranged side by side in the Y-direction.

The housing chamber 51A is the part housing the electrode junction body 20 inside.

The electrolyte introduction portion 51B is provided in communication with the housing chamber 51A. The electrolyte introduction portion 51B of the present embodiment is provided such that its width in the X-direction is the same as the width of the housing chamber 51A. That is, the laminate film 50 has a rectangular shape when viewed in a plan view from the Z-direction.

The electrolyte introduction portion 51B is a part configured such that when a lithium ion secondary battery is produced, an opening communicating with the electrolyte introduction portion 51B is provided in the laminate film 50, and an electrolytic solution as an electrolyte injected through this opening is introduced into the housing chamber 51A. In other words, the electrolytic solution injected into the electrolyte introduction portion 51B through the opening is one with which the electrode junction body 20 housed within the housing chamber 51A is impregnated. Th electrolytic solution is temporarily held in the electrolyte introduction portion 51B until the electrode junction body 20 is fully impregnated with the electrolytic solution. Thus, the electrolyte introduction portion 51B has a volume capable of holding the electrolytic solution with which the electrode junction body 20 is impregnated. For example, as shown in Fig. 15, it is preferred for the electrolyte introduction portion 51B to have a height h2, which is equal to or larger than the height h1 of the housing chamber 51A, in the Y-direction, the direction of side-by-side arrangement of the housing chamber 51A and the electrolyte introduction portion 51B. As noted here, the height h2 of the electrolyte introduction portion 51B is rendered equal to or larger than the height h1 of the housing chamber 51A (h2≥h1), whereby all of the electrolytic solution with which the electrode junction body 20 is impregnated can be temporarily held in the electrolyte introduction portion 51B. Needless to say, the above configuration is not limiting and, if the electrolytic solution is to be injected dividedly in two or more parts, the height h2 of the electrolyte introduction portion 51B may be smaller than the height of the housing chamber 51A.

The part of the laminate film 50 provided with the electrolyte introduction portion 51B is provided with a region 52 which can be closed by fusion bonding or the like when an electrolytic solution is injected into the internal space 51 to produce a lithium ion secondary battery. This region 52 is provided continuously over the X-direction of the laminate film 50 so that the housing chamber 51A can be hermetically sealed by joining together the two laminate films 50 facing in the Z-direction. After an electrolytic solution, an electrolyte, is injected into the internal space 51, at least a part of the region 52 is closed (in detail, this region is continuously closed in the X-direction in Fig. 14, while at least a part of it is closed in the Y-direction; in the present embodiment, the closed part is called a joint region 53) by fusion bonding or the like, whereby the internal space 51 is divided into the housing chamber 51A where the electrode junction body 20 is housed, and the opening side of the electrolyte introduction portion 51B. Such a region 52 is provided in at least a part of the electrolyte introduction portion 51B.

In the present embodiment, a part of a zone of the laminate film 50 where the electrolyte introduction portion 51B is formed defines the region 52, and a part of the region 52 serves as the joint region 53. However, this configuration is not limiting, and the entire surface formed with the electrolyte introduction portion 51B may be set as the region 52; and further, all of the range of the region 52 may be joined to set all of the region 52 (entirely in the X-direction and the Y-direction) as the joint region 53.

In the present embodiment, moreover, the joint region 53 of the region 52 is fusion-bonded to divide the internal space 51 into two spaces. However, this configuration is not limiting and, if the housing chamber 51A housing the electrode junction body 20 can be divided so as not to communicate with the outside, the joint region 53 of the region 52 may be adhered inwardly of the exterior member 50 (within the internal space 51) with the use of an adhesive or an adhesive film. The joint region 53 is preferably provided at a position as close as possible to the electrode junction body 20. That is, the region 52 for closure is provided between the electrode junction body 20 and the opening of the laminate film 50 communicating with the electrolyte introduction portion 51B. Preferably, of the region 52 for closure, a location close to the electrode junction body 20 is actually joined to create the joint region 53. By so doing, when the joint region 53 of the region 52 for closure is closed to produce a lithium ion secondary battery, the volume of the lithium ion secondary battery can be minimized to achieve downsizing.

As shown in Fig. 16, the laminate film 50 is configured such that its portion to become the housing chamber 51A is convex-shaped in comparison with other regions so as to form a space capable of housing the thick electrode junction body 20. That is, regions of the laminate film 50 other than the housing chamber 51A, namely, outer peripheral parts to be fusion-bonded and the region 52 for closure, are formed such that the two opposing surfaces of the laminate film 50 are easily adhered. In the electrolyte introduction portion 51B, the internal space 51 is blocked by bringing the two laminate films 50 into contact during hermetic sealing. Here, the state where the internal space 51 is blocked refers to a state where the laminate films 50 are not joined together, but are merely in contact. As noted here, the opposing laminate films 50 are brought into intimate contact in the region 52 for closure, and the opposing laminate films 50 are joined together by fusion bonding or the like. When the two opposing surfaces of the laminate films 50 are closely contacted for this purpose, wrinkles due to loosening minimally occur, so that bonding failure of the opposing laminate films 50 can be prevented, and communication between the two spaces divided by the joint region 53 of the internal space 51 can be prevented. If, instead of providing the housing chamber 51A in the convex shape, the whole of the laminate film 50 is shaped so as to be loose enough to form a space capable of housing the electrode junction body 20, wrinkles due to loosening are liable to occur when the part of the region 52 is joined by fusion bonding. Such wrinkles are likely to cause bonding failure in gaps between the wrinkles, and the two spaces divided by the joint region 53 of the internal space 51 may communicate with each other. In the present embodiment, the region to become the housing chamber 51A is shaped so as to be convex. In the electrolyte introduction portion 51B, the opposing laminate films 50 are kept intimately contacted. When the region 52 is joined, therefore, wrinkles minimally occur, the opposing laminate films 50 can be reliably joined together, without gaps, by fusion bonding or the like, and the housing chamber 51A can be hermetically sealed reliably, without communication between the two spaces divided by the joint region 53 of the internal space 51.

The lithium ion secondary battery structure 10 described above is hermetically sealed, without the injection of an electrolytic solution, as an electrolyte, into the internal space 51 of the laminate film 50. Here, no injection of the electrolytic solution into the laminate film 50 refers to the absence of components of an electrolyte, such as an electrolytic solution, inside the laminate film 50. In short, the electrode junction body 20 not impregnated with an electrolytic solution is housed in the interior of the laminate film 50.

In the present embodiment, the internal space 51 of the laminate film 50 is hermetically sealed in a low humid state. The low humidity state of the internal space 51 refers to a highly dry state in which the electrode junction body 20 within the internal space 51, or the electrolytic solution to be injected afterwards into the internal space 51 is in an environment without such a water content as to impair the function of the battery, for example, at a dew-point temperature of -20°C or lower. The internal space 51 is hermetically sealed, with its interior in the low humidity state, as noted above. Thus, the electrode active material layer of the electrode junction body 20 is inhibited from degrading due to water present within the internal space 51 and, finally, deterioration of the performance of the battery can be suppressed. Besides, the internal space 51 is hermetically sealed, with its interior in the low humidity state, so that when an electrolytic solution is injected later into the internal space 51 to produce a lithium ion secondary battery, incorporation of water inside the internal space 51 into the electrolytic solution injected into the internal space 51 can be suppressed, and deterioration in the performance of the lithium ion secondary battery can be suppressed. Generally, the lithium ion secondary battery uses a nonaqueous electrolytic solution being a nonaqueous electrolyte. If water is taken into the nonaqueous electrolytic solution, the desired performance of the lithium ion secondary battery cannot be exhibited.

The low humidity state inside the internal space 51 as above can be achieved, for example, by replacing the gas inside the internal space 51 by a gas in a low humidity state. The gas inside the internal space 51 is not limited, as long as it is in a low humidity state. It may be air, or an inert gas such as nitrogen or a rare gas.

The low humidity state inside the internal space 51 can also be realized by reducing the pressure to a pressure lower than atmospheric pressure (1 Pa) (i.e., a negative pressure). That is, the internal space 51 may be hermetically sealed, with its interior in a deaerated (evacuated or vacuum) state. The vacuum state refers to a state, for example, at a pressure of 1 Pa or lower, preferably 0.1 Pa or lower. Particularly, by deaerating the internal space 51 to bring about a low humidity state, a situation in which the gas inside the internal space 51 expands owing to a change in air pressure or a change in temperature during transportation of the lithium ion secondary battery structure 10, whereby the hermetic sealing of the laminate film 50 is released, can be suppressed. Additionally, by deaerating the internal space 51 to bring about a low humidity state, the lithium ion secondary battery structure 10 can be downsized to achieve a space saving during storage or transportation.

With the lithium ion secondary battery structure 10 having the above features, no electrolytic solution is injected into the internal space 51. Hence, the limitation on transportation ascribed to an electrolytic solution is not imposed during air transportation or the like, the structure 10 can be transported by any transportation means including air transportation or marine transportation, and the transportation can be performed with safety and in a short time. By hermetically sealing the internal space 51 of the exterior member 50, moreover, the intrusion of water or the like in an outside atmosphere into the internal space 51 can be suppressed. In particular, by hermetically sealing the internal space 51 of the lithium ion secondary battery structure 10 in a low humidity state, the entry of water into the internal space 51 can be suppressed. Consequently, the electrode active material layer of the electrode junction body 20 is inhibited from degrading due to water and, finally, deterioration of the performance of the battery can be suppressed. Besides, the internal space 51 is hermetically sealed, with its interior in the low humidity state, so that when an electrolytic solution is injected later into the internal space 51 to produce a lithium ion secondary battery, incorporation of water inside the internal space 51 into the electrolytic solution injected into the internal space 51 can be suppressed, and deterioration in the performance of the lithium ion secondary battery can be suppressed.

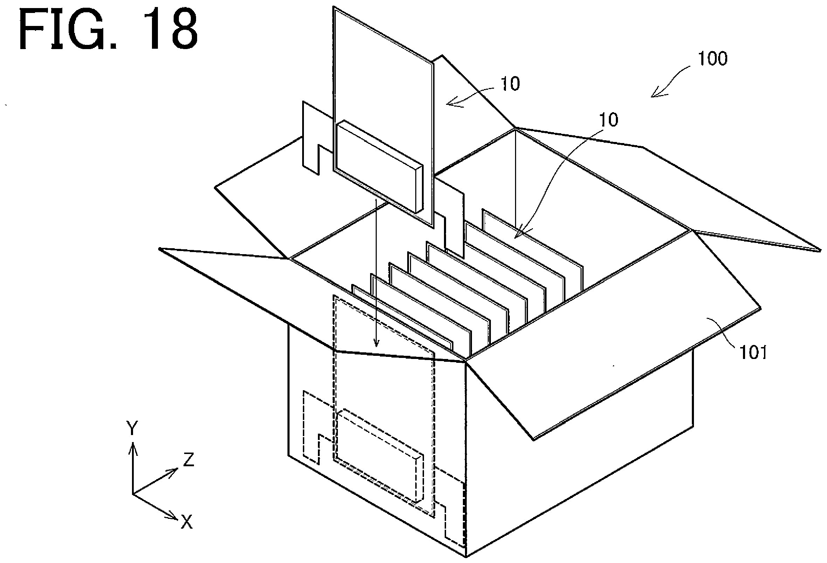

The lithium ion secondary battery structure 10 of the above configuration is also packed so as to be transportable, and is transported in the form of a package. An example of the package is shown in Fig. 18. Fig. 18 is a view illustrating the package of the present embodiment.

As shown in Fig. 18, a package 100 comprises a plurality of the lithium ion secondary battery structures 10, and a packing case 101 accommodating the plurality of lithium ion secondary battery structures 10 inside.

The plurality of lithium ion secondary battery structures 10 are stacked within the packing case 101 in a Z-direction which is a thickness direction. In the present embodiment, the plurality of lithium ion secondary battery structures 10 are accommodated in the packing case 101, with the tab leads 40 facing vertically downwardly and the electrolyte introduction portion 51B facing vertically upwardly. Thus, the laminate film 50 can be inhibited from buckling.

The packing case 101 has the shape of a hollow box formed from a corrugated board, a resin, a metal or the like. Inside the so configured packing case 101, the plurality of lithium ion secondary battery structures 10 are arranged.

As noted above, the plurality of lithium ion secondary battery structures 10 are accommodated within the packing case 101, so that the plurality of lithium ion secondary battery structures 10 can be transported at the same time.

Each lithium ion secondary battery structure 10 is preferably accommodated in the packing case 101, with its surroundings wrapped in a cushioning material, although this is not shown. As the cushioning material, a porous material such as polystyrene foam or sponge, paper, or a bag containing air (air cushioning material), for example, is usable. By providing the cushioning material around each lithium ion secondary battery structure 10, a fracture such as a break of the laminate film 50 due to mutual contact of the lithium ion secondary battery structures 10 during transportation can be suppressed.

In the present embodiment, the package 100 contains the plurality of lithium ion secondary battery structures 10. However, this is not limiting, and the package 100 may contain the single lithium ion secondary battery structure 10.

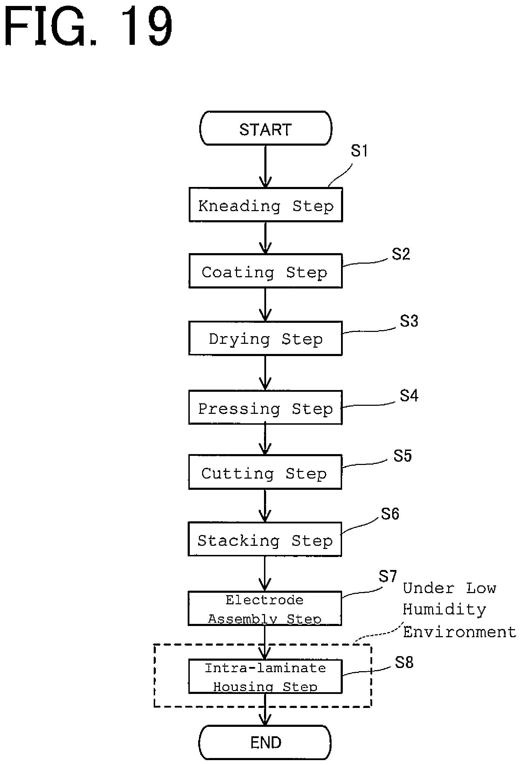

A method for producing the lithium ion secondary battery structure 10 of the present embodiment will be described by reference to Fig. 19. Fig. 19 is a flowchart illustrating the method for producing the lithium ion secondary battery structure of the present embodiment.

As shown in Fig. 19, the electrode junction body 20 having positive electrode plates, separators, and negative electrode plates superposed is formed by the same steps as Step S1 to S6 of Embodiment 1 described earlier, namely, a kneading step, a coating step, a drying step, a pressing step, a cutting step, and a stacking step.

Then, in an electrode assembly step as Step S7, the clips 30 and the tab leads 40 are mounted on the electrode junction body 20 produced in the stacking step. In the present embodiment, the electrode junction body 20 and the clips 30/tab leads 40 are joined together, for example, by any of various welding methods such as laser welding, spot welding, and ultrasonic welding.

Then, in an intra-laminate housing step as Step S8, the clip 30 including the joint between the electrode junction body 20 and the tab lead 40 is covered with the laminate film 50 as if being wrapped therein. The opening of the periphery of the laminate film 50 is fusion-bonded to form the hermetically sealed internal space 51.

The above-described fusion bonding of the outer periphery of the laminate film 50 other than the tab lead 40 can be performed by ultrasonic welding or the like. The fusion bonding between the tab lead 40 and the laminate film 50 can be performed by fusion-bonding the sealant layer provided in the tab lead 40 to the laminate film 50.

For the step which is prior to the intra-laminate housing step (Step S8) carried out under a low humidity environment and which is performed in an environment other than a low humidity environment such as outside a dry room, it is recommendable that after this step, a drying step be inserted. If the cutting step (Step S5) is performed outside the dry room, for example, a drying step should be inserted prior to the stacking step (Step S6). By so doing, water adsorbed by the electrode during the cutting step can be removed. If the steps to be performed in an environment other than a low humidity environment continue, moreover, it is recommendable that a drying step be inserted after the last step of those steps to be performed in an environment other than a low humidity environment. In this case, although there is no need to provide many facilities for carrying out drying treatment, the amount of water adsorbed will be large, and thus the drying time may be long. A burden on the electrode, such as overdrying, is also conceivable . If the avoidance of such an event is prioritized, a drying step should be inserted after each of the steps to be performed in an environment other than a low humidity environment, even if the steps to be performed in an environment other than a low humidity environment continue.

The above intra-laminate housing step is performed in a low humidity environment, whereby the internal space 51 can be hermetically sealed, with its interior in a low humidity state.

In the present embodiment, the intra-laminate housing step is performed in the low humidity environment. It is preferred, however, that at least after the drying step as Step S3, all of the steps for production of the lithium ion secondary battery structure 10 shown in Fig. 19 be carried out in a low humidity environment and, more preferably, the steps performed in the low humidity environment be performed in the same dry room. In charging an inert gas into the internal space 51, moreover, it is recommendable that the method of charging an inert gas such as nitrogen into the internal space 51 be an optimum method conformed to the aforementioned method of sealing. For example, it is advisable that the intra-laminate housing step be performed in a low humidity environment and in an inert gas atmosphere. Furthermore, in order to bring the interior of the internal space 51 to a pressure reduced state, it is recommendable that when the opening is sealed after fusion bonding of parts of the laminate film 50 other than the opening, the opening be sealed after achievement of the pressure reduced state inside the internal space 51, or the intra-laminate housing step be performed under a pressure reduced environment. By so doing, the internal space 51 of the laminate film 50 can be hermetically sealed easily, with its interior in a low humidity state.

A method of producing a lithium ion secondary battery, which is a nonaqueous electrolyte secondary battery, using the above lithium ion secondary battery structure 10 is the same as in the aforementioned Embodiment 1. Thus, repeated explanations will be omitted.

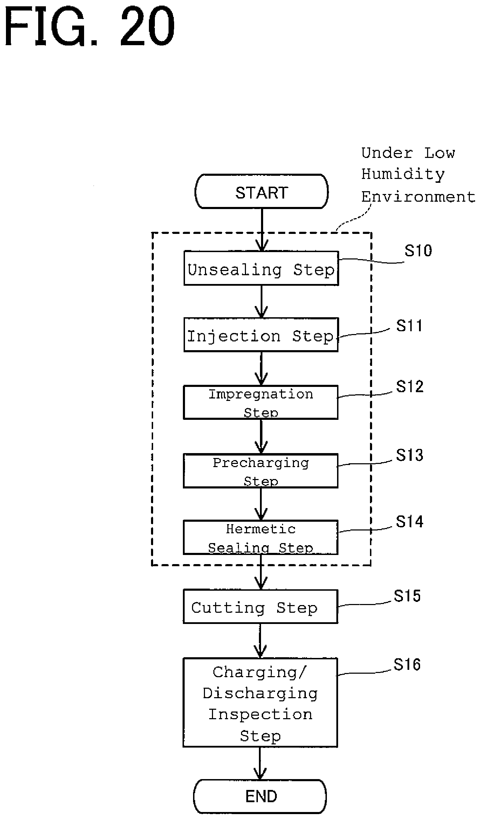

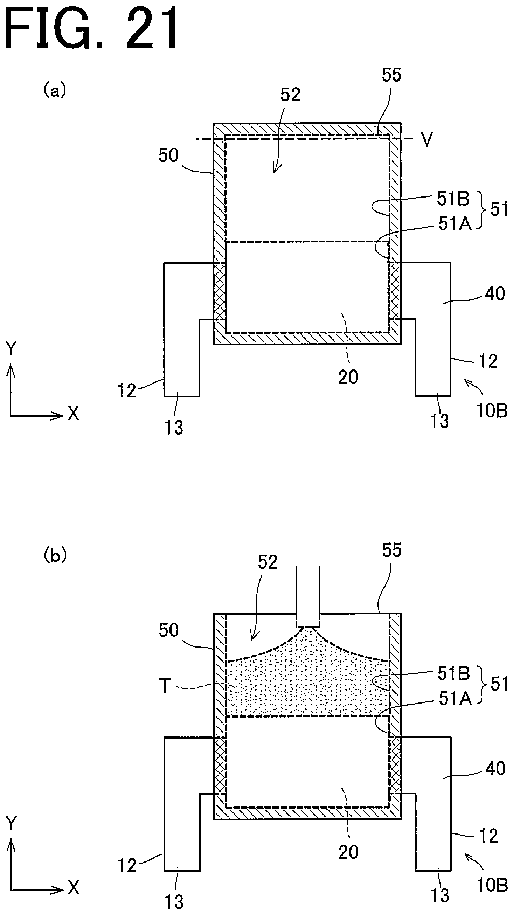

The method of producing the lithium ion secondary battery using the lithium ion secondary battery structure 10 will be described by reference to Fig. 20 to Fig. 23. Fig. 20 is a flowchart illustrating the method of producing the lithium ion secondary battery. Figs. 21(a), 21(b) to Fig. 23 are plan views illustrating the method of producing the lithium ion secondary battery.

First, in an unsealing step as Step S10, the laminate film 50 is formed with an opening which communicates with the electrolyte introduction portion 51B. In the present embodiment, as shown in Fig. 21(a), an opening 55 is formed by cutting the laminate film 50 at a position indicated by a broken line V such that a fusion-bonded part of the electrolyte introduction portion 51B at the end on the side opposite to the housing chamber 51A is cut off. That is, in the present embodiment, the opening 55 is provided over the X-direction at the end of the laminate film 50 on the side opposite to the housing chamber 51A in the Y-direction of the laminate film 50. Of course, the opening 55 is not limited to such a dimension and, for example, the opening may be formed only partly in the X-direction. In short, the opening 55 may be formed by cutting a corner of the laminate film.

The unsealing step is preferably performed in a low humidity environment. By performing the unsealing step in the low humidity environment, water is not taken into the internal space 51 after unsealing. If an inert gas is charged into the internal space 51 as stated above, it is recommendable that the unsealing step as well be performed in an inert gas atmosphere, and the process including the subsequent injection step up to the hermetic sealing step be performed in an inert gas atmosphere.

Then, in an injection step as Step S11, an electrolytic solution T, as an electrolyte, is injected through the opening 55 into the internal space 51 of the laminate film 50, as shown in Fig. 21(b). The electrolytic solution T is injected in an amount necessary to impregnate the electrode junction body 20. The electrolytic solution T thus injected through the opening 55 into the internal space 51 of the laminate film 50 is temporarily held in the electrolyte introduction portion 51B. This injection step is also performed preferably in a low humidity environment. By so performing the injection step in the low humidity environment, the incorporation of water into the electrolytic solution T is suppressed, and a decline in battery performance can be suppressed.

The electrolytic solution T to be used in Factory Y is transported from Factory X to Factory Y separately from the lithium ion secondary battery structure 10. If the electrolytic solution T to be injected is transported from Factory X, it is possible to minimize the error of injecting an electrolytic solution different in composition from the electrolytic solution T which should be injected. If care is taken to avoid making such an error, acquisition of the electrolytic solution T to be used in Factory Y is, of course, not limited to the above-mentioned manner of acquisition. For example, the same electrolytic solution as the electrolytic solution T to be injected into the lithium ion secondary battery structure 10 is procured directly from an electrolytic solution manufacturer located near Factory Y. This procurement is preferred, because Factory Y can provide the necessary electrolytic solution T without involving the limitation associated with the transportation of the electrolytic solution T. Particularly if Factory X and Factory Y are located in different countries, it is preferred to procure the necessary electrolytic solution T in the country where Factory Y is located. If Factory X and Factory Y belong to different companies, moreover, the company owning Factory Y which has purchased the lithium ion secondary battery structure 10 has the possibility of procuring the electrolytic solution T, which is to be injected into the lithium ion secondary battery structure 10, at a low cost through its own channels. This way of procurement is preferred.

Then, in an impregnation step as Step S12, the electrode junction body 20 inside the housing chamber 51A is impregnated with the electrolytic solution T held in the electrolyte introduction portion 51B. Hereinafter, the electrode junction body 20 impregnated with the electrolytic solution T will be designated as the electrode junction body 20A. In this impregnation step, the rate at which the electrode junction body 20 is impregnated with the electrolytic solution T differs according to the structure of or the material for the electrode junction body 20. As an example, the necessary time for the impregnation step is of the order of several minutes to several tens of minutes.

As noted above, the electrolytic solution T for impregnating the electrode junction body 20 is temporarily held by the electrolyte introduction portion 51B. Hence, there is no need to continue injecting the electrolytic solution T through the opening 55 while replenishing it until the impregnation of the electrode junction body 20 with the electrolytic solution T is finished. Thus, the necessity for complicated steps as the injection step and the impregnation step is obviated. Furthermore, before the impregnation of the electrode junction body 20 with the electrolytic solution T is finished, the unsealing step and the injection step are performed repeatedly for a next lithium ion secondary battery structure 10, and the impregnation steps for the lithium ion secondary battery structures 10 having the electrolytic solution T injected thereinto can be performed simultaneously. Thus, the manufacturing process can be carried out efficiently to increase productivity.

It is also preferred for the impregnation step to be performed in a low humidity environment. By performing the impregnation step in a low humidity environment, the intrusion of outside air containing water into the internal space 51 of the exterior member 50 through the opening 55 can be suppressed, and the incorporation of water into the electrolytic solution T can be inhibited.

Then, a precharging (formation charging) step as Step S13 is performed. That is, the precharging (formation charging) of the lithium ion secondary battery structure 10 having the electrode junction body 20 impregnated with the electrolytic solution T is carried out. At this time, the opening 55 has not been sealed yet, so that a gas generated by the precharging is exhausted to the outside through the opening 55. In the precharging, a gas generated inside the internal space 51 may be sucked by a deaeration device for exhaust to the outside.

Depending on the structure of or the material for the electrode junction body 20, the material for the electrolytic solution T, and so on, there is a case in which no gas is generated by precharging, or the resulting gas is in a minute amount. In case no gas is generated by precharging, or the resulting gas is in a minute amount, as above, a hermetic sealing step to be described later may be performed prior to precharging. It goes without saying that if the hermetic sealing step is performed before precharging, a cutting step to be described later maybe carried out simultaneously with the hermetic sealing step, in other words, prior to precharging.

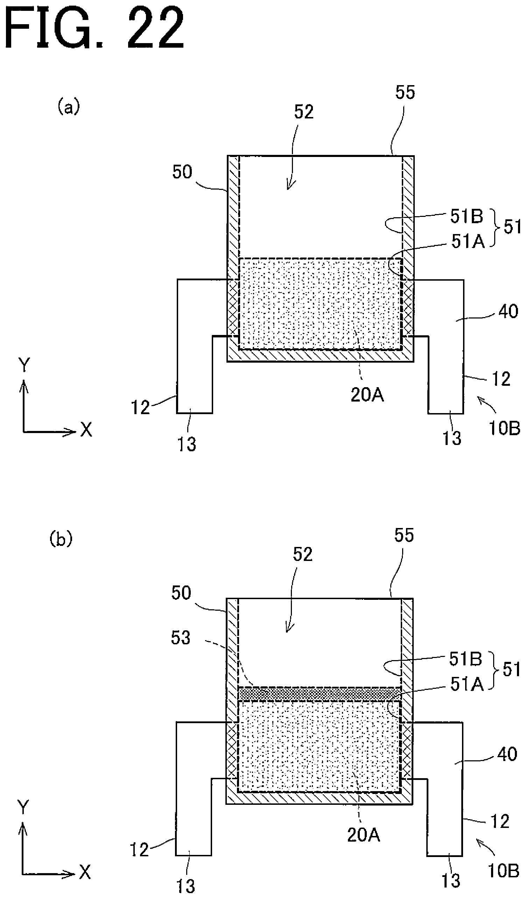

Then, in the hermetic sealing step as Step S14, at least a part of the electrolyte introduction portion 51B is closed to hermetically seal the housing chamber 51A. In the hermetic sealing step of the present embodiment, as shown in Fig. 22(b), while the internal space 51 is being fully deaerated under a low humidity environment, a region 52 for closure of the laminate film 50, i.e., a joint region 53, is formed by closing a part of the electrolyte introduction portion 51B by means of fusion bonding or the like, to hermetically seal the housing chamber 51A. In the present embodiment, the region 52 (joint region 53) is provided at a border of the electrolyte introduction portion 51B with the housing chamber 51A, so that the formation of the joint region 53 hermetically seals the housing chamber 51A alone. That is, the internal space 51 is divided into the housing chamber 51A housing the electrode junction body 20A and the electrolyte introduction portion 51B provided with the opening 55, without communication therebetween. The region 52 of the laminate film 50 according to the present embodiment is closed by fusion bonding by means of ultrasonic welding.

In the hermetic sealing step of the present embodiment, the region 52 at the border of the electrolyte introduction portion 51B with the housing chamber 51A is closed. However, this configuration is not limiting, and the end of the electrolyte introduction portion 51B provided with the opening 55 maybe closed, or all regions of the electrolyte introduction portion 51B may be closed.

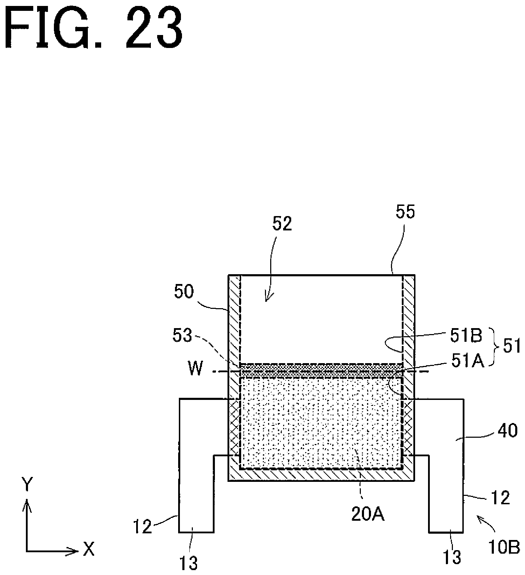

Then, in a cutting step as Step S15, the laminate film 50 is cut at a position indicated by a broken line W to cut off surplus parts, as shown in Fig. 23. By so doing, a lithium ion secondary battery of a relatively small size can be produced. In the cutting step of the present embodiment, the joint region 53 is cut so as to be segmented, whereby the state of sealing of the housing chamber 51A is maintained. That is, with at least a part of the joint region 53 closing the housing chamber 51A, in other words, with a part of the joint region 53 remaining in the electrode junction body 20A, the joint region 53 is cut so as to cut off the other parts. By this procedure, a lithium ion secondary battery can be produced, with the housing chamber 51Abeing hermetically sealed with the joint region 53. In the present embodiment, the joint region 53 is cut so as to be segmented, but this is not limiting. Parts of the region 52 other than the joint region 53 may be cut so that all of the joint region 53 will remain on the side of the electrode junction body 20A. Alternatively, cutting may be carried out at a part of the electrode introduction portion 51B other than the region 52. Incidentally, the cutting step may be performed in a low humidity environment, or need not be performed in a low humidity environment.

In the present embodiment, a surplus region of the laminate film 50 is cut off by performing the cutting step. However, this is not limiting, and a lithium ion secondary battery may be formed, with the electrode introduction portion 51B remaining in the laminate film 50, without performing the cutting step. If a lithium ion secondary battery is to be produced, with the electrode introduction portion 51B remaining in the laminate film 50, the hermetic sealing step may be performed so as to close the end of the laminate film 50 where the opening 55 of the electrode introduction portion 51B is provided. In detail, even if the electrode introduction portion 51B and the housing chamber 51A communicate, the electrolytic solution T of the electrode junction body 20A impregnated with the electrolytic solution T does not enter the electrode introduction portion 51B, thus posing no problem. By providing the joint region 53 at the border of the electrode introduction portion 51B with the housing chamber 51A, however, the electrode junction body 20A does not move inside the housing chamber 51A, with the result that a twist or a break of the exterior member 50 can be suppressed.

Then, in a charging/discharging inspection step as Step S16, the products undergo inspection such as charging/discharging inspection. Of these products, the product which fulfills predetermined criteria is shipped as a lithium ion secondary battery.

In the above manufacturing process for the lithium ion secondary battery, Steps S10 to S14, namely, the unsealing step, the injection step, and the hermetic sealing step are performed in a low humidity environment, as mentioned above. Incidentally, the term "under or in a (the) low humidity environment" refers, for example, to a highly dry state at a dew-point temperature of -20°C or lower. That is, the system is maintained in an environment such as a low humidity gas atmosphere, a vacuum state, or an inert gas atmosphere.

As noted above, the unsealing step, the injection step, and the hermetic sealing step for the laminate film 50 are performed in the low humidity environment. As a result, the entry of a gas, which has not been humidity-controlled, such as outside air, into the housing chamber 51A is suppressed, and the housing chamber 51A can be hermetically sealed, with its interior in a low humidity state. Thus, the electrode active material layer of the electrode junction body 20 or the injected electrolytic solution T can be inhibited from being degraded by water, and the resulting lithium ion secondary battery can obtain the desired battery performance.

The lithium ion secondary battery structure 10, in which the electrolytic solution T has not been injected and the internal space 51 is in a low humidity state, is transported from Factory X to Factory Y, as stated above. In air transportation or the like, therefore, the volume of transport is not restricted, and transportation can take place safely. Consequently, as compared with the transportation of the lithium ion secondary battery, with the electrolytic solution T injected, from Factory X to Factory Y, safe transportation can be done in fewer days of transportation with the use of air transportation or the like.

By providing the lithium ion secondary battery structure 10 with the electrolyte introduction portion 51B as mentioned above, the unsealing step and the injection step are performed repeatedly to produce a plurality of the lithium ion secondary battery structures 10 in which the electrolytic solution T is injected. Then, the impregnation step is performed for the plurality of lithium ion secondary battery structures 10 having the electrolytic solution T injected thereinto. In detail, during the impregnation step for the single lithium ion secondary battery structure 10, the liquid injection step for another lithium ion secondary battery structure 10 can be performed. Thus, the manufacturing time can be shortened. In addition, the impregnation steps can be performed for two or more of the lithium ion secondary battery structures 10 concurrently. Since the impregnation steps each requiring a lengthy time can be performed for the plurality of lithium ion secondary battery structures 10 concurrently, the operating efficiency can be increased. Thereafter, the hermetic sealing step can be performed continuously for the plurality of lithium ion secondary battery structures 10 which have finished the impregnation step, whereby the work efficiency can be increased.

As explained above, the lithium ion secondary battery structure 10, as a nonaqueous electrolyte secondary battery structure, of the present embodiment comprises the electrode junction body 20; the laminate film 50, as an exterior member, composed of a film for sealing the electrode junction body 20; and the tab leads 40, as external electrode terminals, penetrating the laminate film 50 from inside to outside and connected to the electrode junction body 20, the laminate film 50 including the housing chamber 51A housing the electrode junction body 20 inside and the electrolyte introduction portion 51B communicating with the housing chamber 51A, and the laminate film 50 being hermetically sealed, without the injection thereinto of the electrolytic solution T as an electrolyte.

As mentioned above, the electrolytic solution T is not injected into the lithium ion secondary battery structure 10. During air transportation or the like, therefore, the limitation on the transport volume ascribed to the electrolytic solution T is not imposed. Thus, transportation by any transportation means including air transportation or marine transportation using a ship becomes possible, and the transportation can be performed with safety and in a short time.

After transportation of the lithium ion secondary battery structure 10, a lithium ion secondary battery, which is a nonaqueous electrolyte secondary battery, can be produced easily by simply injecting the electrolytic solution T into the electrolyte introduction portion 51B of the lithium ion secondary battery structure 10.

With the lithium ion secondary battery structure 10 of the present embodiment, it is preferred that the laminate film 50 constituting the exterior member be hermetically sealed such that the outer periphery of the electrode junction body 20 is continuously joined over the circumferential direction. According to this feature, the laminate film 50 is easy to hermetically seal and, when the electrolytic solution T, an electrolyte, is injected into the laminate film 50 to produce a lithium ion secondary battery, an opening for injecting the electrolytic solution T into the laminate film 50 can be easily formed.

With the lithium ion secondary battery structure 10 of the present embodiment, it is preferred for the electrolyte introduction portion 51B to have a height h2, which is equal to or larger than the height h1 of the housing chamber 51A, in the Y-direction, the direction of side-by-side arrangement of the housing chamber 51A and the electrolyte introduction portion 51B. As notedhere, the height h2 of the electrolyte introduction portion 51B is rendered equal to or larger than the height h1 of the housing chamber 51A. Thus, when the electrolytic solution T is injected into the electrolyte introduction portion 51B, all of the electrolytic solution T with which the electrode junction body 20 is impregnated can be held in the electrolyte introduction portion 51B. It is not necessary anymore to repeat the injection of the electrolytic solution T, and the work efficiency can be increased.

With the lithium ion secondary battery structure of the present embodiment, it is preferred that the other end of the tab lead 40, an external electrode terminal, on the side opposite to one end thereof joined to the electrode junction body 20 be extended toward the side opposite to the electrolyte introduction portion 51B in the Y-direction in which the housing chamber 51A and the electrolyte introduction portion 51B are arranged side by side. As noted here, the tab lead 40 is extended to the side opposite to the electrolyte introduction portion 51B, whereby when a part of the electrolyte introduction portion 51B beside the housing chamber 51A is closed to produce a lithium ion secondary battery, the tab lead 40 does not present an obstacle, making this closure easy.

With the lithium ion secondary battery structure of the present embodiment, moreover, the laminate film 50, the exterior member, is preferably hermetically sealed, with its interior in a low humidity state. As mentioned here, the laminate film 50 is hermetically sealed, with its interior in a low humidity state, meaning that the exterior member not filled with the electrolytic solution T is hermetically sealed, with its interior in a low humidity state. During air transportation, marine transportation using a ship, or the like, therefore, the limitation on transportation due to the electrolytic solution T is not imposed. Thus, transportation by any transportation means including air transportation or marine transportation using a ship becomes possible, and the transportation can be performed with safety and in a short time. After transportation of the lithium ion secondary battery structure 10, a lithium ion secondary battery can be produced easily by injecting the electrolytic solution T into the lithium ion secondary battery structure 10.

The package 100 of the present embodiment includes the above-mentioned lithium ion secondary battery structure 10 which is a nonaqueous electrolyte secondary battery structure.

As mentioned above, the lithium ion secondary battery structure 10 in which the electrolytic solution T is not injected into the internal space 51 is packaged for transportation. The resulting package 100 is free from the limitation on the transport volume due to the electrolytic solution T during air transportation, marine transportation using a ship, or the like. Thus, transportation by any transportation means including air transportation or marine transportation using a ship becomes possible, and the transportation can be performed with safety and in a short time.

The lithium ion secondary battery, a nonaqueous electrolyte secondary battery, of the present embodiment includes the above-mentioned lithium ion secondary battery structure 10 which is a nonaqueous electrolyte secondary battery structure. At least a part of the electrolyte introduction portion 51B of the laminate film 50, the exterior member, is closed to hermetically seal the housing chamber 51A, and the electrolytic solution T, an electrolyte, is charged into the housing chamber 51A.

By so hermetically sealing the housing chamber 51A, the amount of the electrolytic solution T to be charged into the housing chamber 51A can be decreased. Furthermore, the resulting product can be used as a lithium ion secondary battery, without the need to cut off a surplus region of the electrolyte introduction portion 51B of the laminate film 50.

With the lithium ion secondary battery of the present embodiment, moreover, it is preferred that the electrolyte introduction portion 51B of the laminate film 50 as the exterior member be removed, with a part thereof closed to hermetically seal the housing chamber 51A being left intact. According to this feature, by removing the unnecessary part of the electrolyte introduction portion 51B, the resulting lithium ion secondary battery can be rendered small-sized as compared with all of the electrolyte introduction portion 51B being left. Alternatively, the size of the lithium ion secondary battery can be made the same as the conventional size. Thus, the casing accommodating the lithium ion secondary battery can be used unchanged.

According to the method for producing the lithium ion secondary battery structure, as a nonaqueous electrolyte secondary battery structure, of the present embodiment, the structure comprises the electrode junction body 20; the laminate film 50, as an exterior member, composed of a film for sealing the electrode junction body 20; and the tab leads 40, as external electrode terminals, penetrating the laminate film 50 from inside to outside and connected to the electrode junction body 20, the laminate film 50 including the housing chamber 51Ahousing the electrode junction body 20 inside and the electrolyte introduction portion 51B communicating with the housing chamber 51A, and the laminate film 50 being hermetically sealed, with the electrode junction body 20 being housed in the housing chamber 51A, without the injection of the electrolytic solution T, as an electrolyte, into the laminate film 50.

The above production method can easily produce the lithium ion secondary battery structure 10 which has been hermetically sealed and where the electrolytic solution T has not been injected into the laminate film 50.

With the method for producing the lithium ion secondary battery structure 10 of the present embodiment, the step of hermetically sealing the laminate film 50 is preferably performed in a low humidity environment. By so hermetically sealing the laminate film 50 in a low humidity environment, the interior of the laminate film 50 can be maintained in a low humidity state, and degradation of the electrode active material layer of the electrode junction body within the laminate film 50 can be suppressed. When the electrolytic solution T is injected into the laminate film 50, deterioration of the electrolytic solution T by water inside the laminate film 50 can be suppressed.

According to the method for producing a lithium ion secondary battery, as a nonaqueous electrolyte secondary battery, of the present embodiment, there is used the lithium ion secondary battery structure 10, as a nonaqueous electrolyte secondary battery structure, comprising the electrode junction body 20; the laminate film 50, as an exterior member, composed of a film for sealing the electrode junction body 20; and the tab leads 40, as external electrode terminals, penetrating the laminate film 50 from inside to outside and connected to the electrode junction body 20, the laminate film 50 including the housing chamber 51A housing the electrode junction body 20 inside and the electrolyte introduction portion 51B communicating with the housing chamber 51A, and the laminate film 50 being hermetically sealed, without the injection of the electrolytic solution T, as an electrolyte, into the laminate film 50. The method comprises the unsealing step of forming the laminate film 50 with the opening 55 communicating with the electrolyte introduction portion 51B; the injection step of injecting the electrolytic solution T, as an electrolyte, into the electrolyte introduction portion 51B through the opening 55; the impregnation step of impregnating the electrode junction body 20 housed in the housing chamber 51A with the electrolytic solution injected into the electrolyte introduction portion 51B; and the hermetic sealing step of closing at least a part of the electrolyte introduction portion 51B to hermetically sealing the interior of the housing chamber.

According to the method for producing a lithium ion secondary battery described above, a lithium ion secondary battery can be produced easily by simply providing the laminate film 50 with the opening 55, and injecting the electrolytic solution T. In addition, the injected electrolytic solution T can be temporarily held by the electrolyte introduction portion 51B, so that in the impregnation step, the electrode connection body 20 can be impregnated with the electrolytic solution T held in the electrolyte introduction portion 51B. Hence, there is no need to inject the electrolytic solution T through the opening 55 while replenishing it until the impregnation is finished, thus obviating the necessity for a complicated step. Furthermore, before the impregnation is finished, the unsealing step and the injection step can be performed for a next lithium ion secondary battery structure 10. Thus, the manufacturing process can be carried out efficiently to increase productivity.

According to the method for producing a lithium ion secondary battery of the present embodiment, it is preferred that after the impregnation step, the precharging step of performing preliminary charging be further provided, and that the hermetic sealing step be performed after the precharging step. By so performing the precharging step before the hermetic sealing step, a gas generated in the precharging step can be discharged to the outside through the opening 55.

According to the method for producing a lithium ion secondary battery of the present embodiment, it is preferred for the hermetic sealing step to close at least a border of the electrolyte introduction portion 51B with the housing chamber 51A. By so closing the border of the electrolyte introduction portion 51B with the housing chamber 51A in the hermetic sealing step, the electrode junction body 20 can be inhibited from moving inside the housing chamber 51A.

According to the method for producing a lithium ion secondary battery of the present embodiment, it is preferred that after the hermetic sealing step, there be further provided the cutting step of cutting the site of the opening 55 of the electrolyte introduction portion 51B, with the housing chamber 51A being hermetically sealed. By so performing the cutting step, a relatively small-sized lithium ion secondary battery can be produced, with a surplus region being cut off.

According to the method for producing a lithium ion secondary battery of the present embodiment, it is preferred that while the impregnation step is being performed for the single lithium ion secondary battery structure 10, a nonaqueous electrolyte secondary battery structure, which has the electrolytic solution T injected thereinto in the injection step, the injection step be performed for another lithium ion secondary battery structure 10, a nonaqueous electrolyte secondary battery structure. According to this feature, before completion of the impregnation step, the injection step can be performed for the next lithium ion secondary battery structure. Thus, the production efficiency can be increased to increase productivity. In detail, while one step selected from the unsealing step, the injection step, and the impregnation step is being performed for the single lithium ion secondary battery structure 10, a nonaqueous electrolyte secondary battery structure, the step different from the step performed for the single lithium ion secondary battery structure 10 is carried out for another lithium ion secondary battery structure 10, a nonaqueous electrolyte secondary battery structure. Consequently, the same step need not be performed dually at the same time, so that the production efficiency can be increased to decrease costs. Furthermore, for example, different steps from among the three steps, i.e. the unsealing step, the injection step, and the impregnation step, are performed concurrently for three of the lithium ion secondary battery structures 10, nonaqueous electrolyte secondary battery structures, whereby the manufacturing efficiency can be increased. Besides, the impregnation step takes time until impregnation is completed. However, the impregnation steps are carried out concurrently for the plurality of lithium ion secondary battery structures 10. Since this procedure can be performed in a short time, as compared with the individual execution of the impregnation step, the production efficiency can be increased to reduce costs.

### (Embodiment 4)

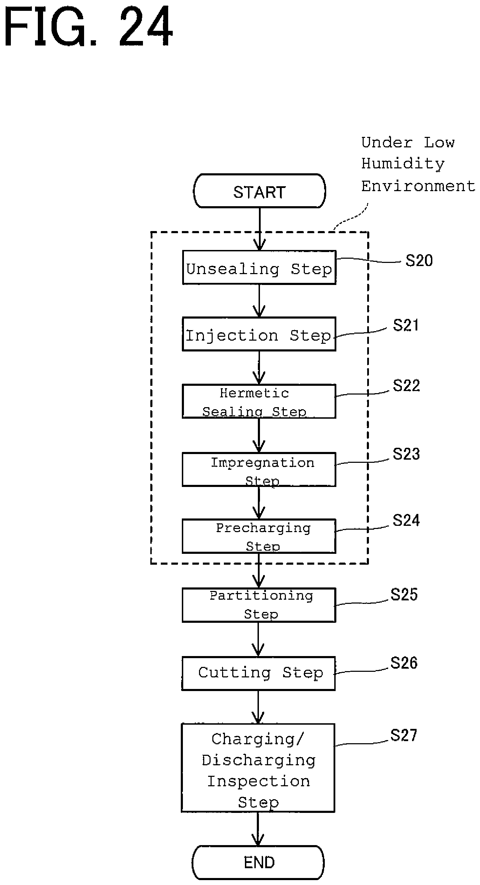

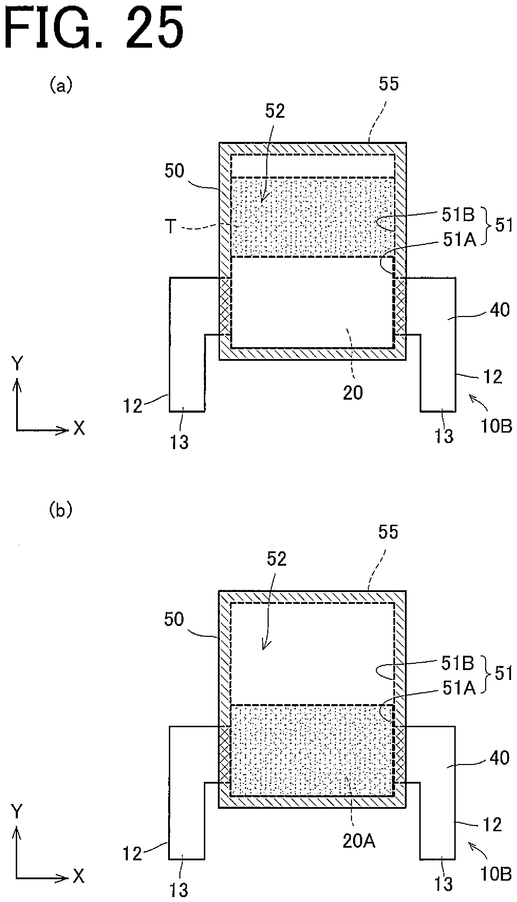

Fig. 24 is a flowchart illustrating a method for producing a lithium ion secondary battery according to Embodiment 4 of the present invention. Figs. 25(a), 25(b) to 27(a), 27(b) are plan views illustrating the method for producing the lithium ion secondary battery according to Embodiment 4 of the present invention. The same members as those in the foregoing Embodiment 3 are assigned the same numerals as in Embodiment 3, and repeated explanations are omitted.

As shown in Fig. 24, an unsealing step as Step S20 and an injection step as Step S21 are performed. These steps S20 and S21 are the same as those in Embodiment 3, and repeated explanations are omitted.

Then, in a hermetic sealing step as Step S22, at least a part of an electrolyte introduction portion 51B is closed to hermetically seal its interior. In the hermetic sealing step of the present embodiment, as shown in Fig. 25(a), while an internal space 51 is being fully deaerated under a low humidity environment, an opening 55 formed in the unsealing step as Step S20 is closed. That is, an end of the electrolyte introduction portion 51B on a side opposite to a housing chamber 51A in the Y-direction is sealed. By this measure, the internal space 51 of a laminate film 50 is hermetically sealed, with an electrolytic solution T being injected thereinto. The sealing of the opening of the laminate film 50 according to the present embodiment is performed by fusion bonding the laminate film 50.

Then, an impregnation step as Step S23 is performed. That is, the hermetic sealing step of the present embodiment is carried out between the injection step and the impregnation step. In the impregnation step of the present embodiment, the opening of the laminate film 50 is sealed, as shown in Fig. 25(b), so that water is difficult to enter from the outside. Thus, there is no need to perform the impregnation step in a low humidity environment. Thus, the impregnation step, which takes time, can be performed outside a device for maintaining a low humidity environment, and the device for maintaining a low humidity environment can be used efficiently in the next unsealing step and injection step. As a result, the manufacturing time can be shortened to increase productivity. In the impregnation step of the present embodiment, moreover, the opening 55 of the laminate film 50 is sealed, so that the electrolytic solution T can be inhibited from leaking to the outside. Thus, the posture of the lithium ion secondary battery structure 10 during the impregnation step is not restricted, so that the lithium ion secondary battery structure 10 can be handled easily. In other words, in the present embodiment, after the hermetic sealing step, there is no need to maintain a posture requiring the opening 55 to face vertically upwardly. The electrode junction body 20 impregnated with the electrolytic solution T will hereinafter be designated as the electrode junction body 20A.

Then, a precharging (formation charging) step as Step S24 is performed. That is, the precharging (formation charging) of the lithium ion secondary battery structure 10 having the electrode junction body 20A impregnated with the electrolytic solution T is carried out. At this time, the opening 55 of the laminate film 50 has been sealed, so that a gas G generated by the precharging is held inside the electrolyte introduction portion 51B and not exhausted to the outside. Furthermore, the precharging step of the present embodiment is performed after the hermetic sealing step, and thus need not be performed in a low humidity environment. Nor is the posture of the lithium ion secondary battery structure 10 restricted.

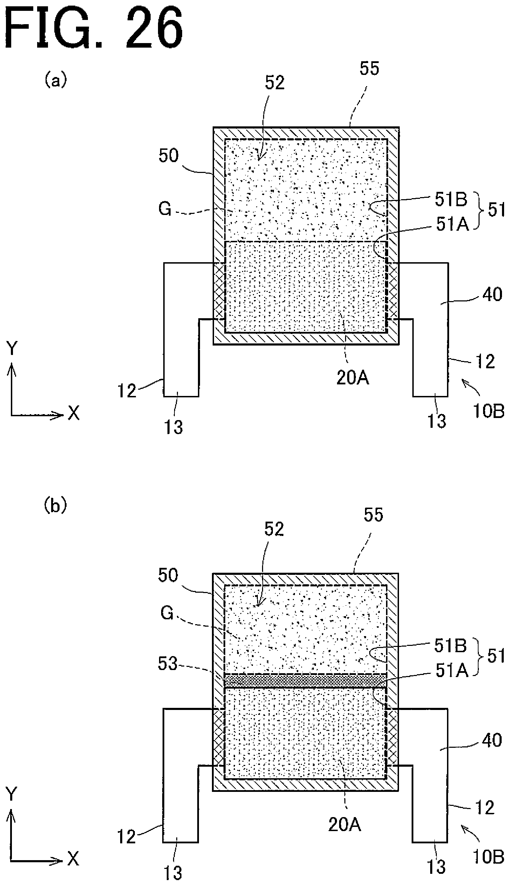

Then, a partitioning step as Step S25 is performed. In the partitioning step of the present embodiment, as shown in Fig. 26(b), a region 52 for closure of the laminate film 50, i.e., a part of the electrolyte introduction portion 51B, is closed by means of fusion bonding or the like to form a joint region 53, thereby hermetically sealing the housing chamber 51A. By forming the joint region 53, the electrolyte introduction portion 51B holding the gas G generated by precharging is also hermetically sealed. Since the gas G is held in the electrolyte introduction portion 51B, however, adhesive force in the joint region 53 is likely to lower as compared with Embodiment 1, when the joint region 53 is formed in the partitioning step. In detail, as in the aforementioned Embodiment 1, precharging is performed, with the gas G being discharged to the outside through the opening 55. By so doing, the gas G generated by precharging presents no obstacle when the joint region 53 is formed in the hermetic sealing step. Thus, a decline in the adhesive force of the joint region 53 can be suppressed.

Then, a cutting step is performed as Step S26. In the cutting step of the present embodiment, as shown in Fig. 27(a), the laminate film 50 is cut at a position indicated by a broken line W so as to divide the joint region 53, whereby a lithium ion secondary battery is produced. That is, as shown in Fig. 27(b), the electrolyte introduction portion 51B holding the gas G generated by precharging can be cut off, without leakage of the gas G to the outside. As a result, the occurrence of fire or corrosion of the device owing to the leakage of the gas G generated by precharging can be suppressed to enhance safety.

Then, in a charging/discharging inspection step as Step S27, the products undergo inspection such as charging/discharging inspection. The product which fulfills predetermined criteria is shipped as a lithium ion secondary battery.

It goes without saying that depending on the structure of or the material for the electrode junction body 20, or the material for the electrolytic solution T, there is a case in which no gas G is generated, or the resulting gas is in a minute amount, during the precharging step. In case no gas is generated, or the resulting gas is in a minute amount, during the precharging step as above, a lithium ion secondary battery may be produced without the execution of the partitioning step or the cutting step. Alternatively, a lithium ion secondary battery may be produced, with the partitioning step being performed, but without execution of the cutting step.

In the present embodiment, the hermetic sealing step is performed prior to the impregnation step. However, this is not limiting, and the hermetic sealing step may be performed after the impregnation step, but before the precharging step. It would be better, however, to perform the hermetic sealing step prior to the impregnation step as mentioned above. By so doing, the impregnation step, which takes time, can be performed outside a device for maintaining a low humidity environment. As a result, the manufacturing time can be shortened to increase productivity.

As described above, according to the method for producing a lithium ion secondarybattery, a nonaqueous electrolyte secondary battery, of the present embodiment, there is used the lithium ion secondary battery structure 10, a nonaqueous electrolyte secondary battery structure, comprising the electrode junction body 20; the laminate film 50, an exterior member, composed of a film for sealing the electrode junction body 20; and the tab leads 40, external electrode terminals, penetrating the laminate film 50 from inside to outside and connected to the electrode junction body 20, the laminate film 50 including the housing chamber 51A housing the electrode junction body 20 inside and the electrolyte introduction portion 51B communicating with the housing chamber 51A, and the laminate film 50 being hermetically sealed, without the injection of the electrolytic solution T, an electrolyte, into the laminate film 50. The method comprises the unsealing step of forming the laminate film 50 with the opening 55 communicating with the electrolyte introduction portion 51B; the injection step of injecting the electrolytic solution T, an electrolyte, into the electrolyte introduction portion 51B through the opening 55; the impregnation step of impregnating the electrode junction body 20 housed in the housing chamber 51A with the electrolytic solution T injected into the electrolyte introduction portion 51B; and the hermetic sealing step of closing at least a part of the electrolyte introduction portion 51B to hermetically sealing the interior of the housing chamber 51A.

According to the method for producing a lithium ion secondary battery described above, a lithium ion secondary battery can be produced easily by simply providing the laminate film 50 with the opening 55, and injecting the electrolytic solution T. In addition, the injected electrolytic solution T can be temporarily held by the electrolyte introduction portion 51B, so that in the impregnation step, the electrode connection body 20 can be impregnated with the electrolytic solution T held in the electrolyte introduction portion 51B. Hence, there is no need to inject the electrolytic solution T through the opening 55 while replenishing it until the impregnation is finished, thus obviating the necessity for a complicated step. Furthermore, before the impregnation is finished, the unsealing step and the injection step can be performed for a next lithium ion secondary battery structure 10. Thus, the manufacturing process can be carried out efficiently to increase productivity.

According to the method for producing a lithium ion secondary battery of the present embodiment, it is preferred that the hermetic sealing step be carried out between the injection step and the impregnation step, and the site of the opening 55 formed in the unsealing step be closed by the hermetic sealing step. By so performing the hermetic sealing step prior to the impregnation step, the opening 55 has been closed in the impregnation step. Thus, leakage of the electrolytic solution T through the opening 55 can be suppressed, and the posture of the lithium ion secondary battery structure is not restricted.

The method for producing a lithium ion secondary battery of the present embodiment preferably further includes, after the impregnation step, the precharging step of performing preliminary charging and, after the precharging step, the partitioning step of closing at least a part of the electrolyte introduction portion 51B to hermetically seal the housing chamber 51A. By so performing the precharging step after the hermetic sealing step, a gas generated by the precharging can be inhibited from being discharged to the outside. Also, the gas generated by the precharging can be hermetically sealed up in the electrolyte introduction portion 51B by the partitioning step.

The method for producing a lithium ion secondary battery of the present embodiment preferably further has, after the partitioning step, the cutting step of cutting the side of the electrolyte introduction portion 51B beside the opening 55, with the housing chamber 51A being hermetically sealed. By so performing the cutting step, a relatively small-sized lithium ion secondary battery can be produced, with a surplus region of the laminate film 50 being cut off. Furthermore, the gas G hermetically sealed up in the electrolyte introduction portion 51B by the partitioning step can be shut off from the lithium ion secondary battery without being exhausted to the outside. Thus, safety can be enhanced.

According to the method for producing a lithium ion secondary battery of the present embodiment, it is preferred that the unsealing step and the injection step be performed repeatedly for the plurality of lithium ion secondary battery structures 10, nonaqueous electrolyte secondary battery structures, which have been hermetically sealed and in which the electrolytic solution T, an electrolyte, has not been injected into the laminate film 50 as the exterior member, whereby the plurality of lithium ion secondary battery structures 10, nonaqueous electrolyte secondary battery structures, in which the electrolytic solution T has been injected be produced, and that the impregnation steps be performed simultaneously for the plurality of lithium ion secondary battery structures 10 in which the electrolytic solution T has been injected. According to these features, the unsealing step and the injection step can be performed for the next lithium ion secondary battery structure before the impregnation step is completed. Thus, the work efficiency can be increased to enhance productivity.

### (Other embodiments)

The embodiments of the present invention have been described above, but the fundamental constitution of the present invention is not limited to the foregoing one.

In the above embodiments, for example, the package 100 having the plurality of lithium ion secondary battery structures 10 to 10B packed so as to be transportable is exemplified. However, this is not limiting, and the lithium ion secondary battery structures 10 to 10B may be packed individually.

In the above embodiments, the electrolytic solution T is exemplified as an electrolyte. However, the electrolyte may be a so-called jelly one.

In the above embodiments, the precharging step is performed. However, this is limiting, and the resulting product may be shipped as a lithium ion secondary battery without undergoing the precharging step.

In the above embodiments, moreover, the lithium ion secondary battery structure using a lithium metal oxide as an electrode active material and a method for producing it; a package; and a lithium ion secondary batter and a method for producing it are shown as examples. However, the present invention is not limited to the product using a lithium metal oxide as an electrode active material, and can be applied to a nonaqueous electrolyte secondary battery structure using a lithium metal oxide as an electrode active material and a method for producing it; a package; and a nonaqueous electrolyte secondary battery and a method for producing it.

### [Explanations of Letters or Numerals]

10, 10A, 10B ... Lithium ion secondary battery structure (nonaqueous electrolyte secondary battery structure); 11 ... Housing chamber; 20 ... Electrode junction body; 21 ... Positive electrode plate; 22 ... Negative electrode plate; 23 ... Separator; 24 ... Positive electrode bundling section; 25 ... Negative electrode bundling section; 30 ... Current collecting member; 30A ... First current collecting plate; 30B ... Second current collecting plate; 31 ... Upper plate; 32 ... Lengthy joining plate; 33 ... Connection plate piece; 40 ... Battery case; 41 ... Housing chamber; 43 ... Liquid injection port; 50 ... Lid member; 51 ... Through-hole; 52 ... Joining portion; 53 ... Liquid injection port; 54 ... Liquid injection port formation region; 60 ... Terminal portion; 60A ... Positive electrode terminal portion; 60B ... Negative electrode terminal portion; 70 ... Adhesion/insulation member; 80 ... Sealing member; 100 ... Package; 101 ... Packing case; 102 ... Cushioning material; 110, 110A ... Laminate film; 111 ... Housing chamber; 112 ... Liquid injection port; 113 ... First sealing region; 114 ... Second sealing region; 120 ... Tab lead; 201 to 204 ... Sealing region; T ... Electrolytic solution; X, Y ... Factory
24 ... Positive electrode side connection portion; 25 ... Negative electrode side connection portion; 30 ... Clip; 40 ... Tab lead (External electrode terminal); 50 ... Laminate film (Exterior member) ; 51 ... Internal space; 51A ... Housing chamber; 51B ... Electrolyte introduction portion; 52 ... Region; 53 ... Joint region; 55 ... Opening; G ... Gas

## Claims

1. A nonaqueous electrolyte secondary battery structure, comprising
an electrode junction body, and
an exterior member having a housing chamber housing the electrode junction body,
wherein an electrolytic solution is not injected into the housing chamber, and the housing chamber is hermetically sealed, with an interior thereof being in a low humidity state.

2. The nonaqueous electrolyte secondary battery structure according to claim 1, wherein
the exterior member has a liquid injection port through which the electrolytic solution can be injected into the housing chamber, and
the liquid injection port is sealed.

3. The nonaqueous electrolyte secondary battery structure according to claim 1 or 2, wherein
the exterior member is composed of a film,
an external electrode terminal penetrating the exterior member from inside to outside and connected to the electrode junction body is provided, and
the exterior member includes the housing chamber housing the electrode junction body inside, and an electrolyte introduction portion communicating with the housing chamber.

4. The nonaqueous electrolyte secondary battery structure according to claim 3, wherein
the exterior member is hermetically sealed such that an outer periphery of the electrode junction body is continuously joined over a circumferential direction.

5. The nonaqueous electrolyte secondary battery structure according to claim 3 or 4, wherein
the electrolyte introduction portion has a height equal to or greater than a height of the housing chamber in a direction in which the housing chamber and the electrolyte introduction portion are arranged side by side.

6. A method for producing the nonaqueous electrolyte secondary battery structure according to any one of claims 1 to 5, comprising
a step of housing the electrode junction body in the housing chamber and hermetically sealing the housing chamber in a low humidity environment, without injecting the electrolytic solution into the housing chamber.

7. The method for producing the nonaqueous electrolyte secondary battery structure according to claim 6, wherein
the exterior member has a liquid injection port through which the electrolytic solution can be injected,
the step of hermetically sealing the housing chamber includes
a step of housing the electrode junction body in the housing chamber, and
a step of sealing the liquid injection port, without injecting the electrolytic solution into the housing chamber, and
at least the step of sealing the liquid injection port is performed in a low humidity environment.

8. A method for producing a nonaqueous electrolyte secondary battery, comprising
a step of opening the housing chamber in a low humidity environment for the nonaqueous electrolyte secondary battery structure according to any one of claims 1 to 5; injecting the electrolytic solution into the housing chamber; and hermetically sealing the housing chamber.

9. The method for producing a nonaqueous electrolyte secondary battery according to claim 8, wherein
the exterior member has a liquid injection port which has been sealed beforehand for injecting the electrolytic solution,
opening of the housing chamber in the low humidity environment unseals the liquid injection port,
injection of the electrolytic solution into the housing chamber is performed through the liquid injection port, and
hermetic sealing of the housing chamber is sealing of the liquid injection port.

10. The method for producing a nonaqueous electrolyte secondary battery according to claim 8, wherein
opening of the housing chamber in the low humidity environment forms in the exterior member an opening portion through which the electrolytic solution can be injected,
injection of the electrolytic solution into the housing chamber is performed through the opening portion, and
hermetic sealing of the housing chamber is sealing of the opening portion.

11. The method for producing a nonaqueous electrolyte secondary battery according to claim 10, wherein
the exterior member is composed of a film, and
the exterior member includes the housing chamber and an electrolyte introduction portion communicating with the housing chamber,
the method comprising:
an unsealing step of forming in the exterior member an opening portion communicating with the electrolyte introduction portion;
an injection step of injecting an electrolyte into the electrolyte introduction portion through the opening portion;
an impregnation step of impregnating the electrode junction body housed in the housing chamber with the electrolyte injected into the electrolyte introduction portion; and
a hermetic sealing step of closing at least a part of the electrolyte introduction portion to hermetically seal an interior of the housing chamber.

12. The method for producing a nonaqueous electrolyte secondary battery according to claim 11, further comprising
after the impregnation step, a precharging step of performing preliminary charging,
wherein the hermetic sealing step is performed after the precharging step.

13. The method for producing a nonaqueous electrolyte secondary battery according to claim 12, wherein
the hermetic sealing step closes at least a border of the electrolyte introduction portion with the housing chamber.

14. The method for producing a nonaqueous electrolyte secondary battery according to claim 13, further comprising
after the hermetic sealing step, a cutting step of cutting a side of the opening portion of the electrolyte introduction portion, with the housing chamber being hermetically sealed.

15. The method for producing a nonaqueous electrolyte secondary battery according to claim 11, wherein
the hermetic sealing step is performed between the injection step and the impregnation step, and
the hermetic sealing step closes a side of the opening portion formed in the unsealing step.

16. The method for producing a nonaqueous electrolyte secondary battery according to any one of claims 11 to 15, wherein
while the impregnation step is being performed for one said nonaqueous electrolyte secondary battery structure having the electrolyte injected thereinto in the injection step, the injection step is performed for another said nonaqueous electrolyte secondary battery structure.
